(19) Europäisches Patentamt
European Patent Office
Office européen des brevets

(11) Veröffentlichungsnummer : **0 349 629 B1**

# (12) EUROPÄISCHE PATENTSCHRIFT

(45) Veröffentlichungstag der Patentschrift :
**01.07.92 Patentblatt 92/27**

(21) Anmeldenummer : **89901271.0**

(22) Anmeldetag : **05.01.89**

(86) Internationale Anmeldenummer :
**PCT/EP89/00007**

(87) Internationale Veröffentlichungsnummer :
**WO 89/06246 13.07.89 Gazette 89/15**

(51) Int. Cl.[5] : **C08F 8/32,** C08F 8/44, C08F 20/34, C08F 20/60, C08F 26/06

## (54) SEITENKETTENHALTIGE VINYLMONO- UND -COPOLYMEREN.

Verbunden mit 89100159.6/0323847 (europäische Anmeldenummer/Veröffentlichungsnummer) durch Entscheidung vom 30.07.91.

(30) Priorität : **07.01.88 DE 3800199**

(43) Veröffentlichungstag der Anmeldung :
**10.01.90 Patentblatt 90/02**

(45) Bekanntmachung des Hinweises auf die Patenterteilung :
**01.07.92 Patentblatt 92/27**

(84) Benannte Vertragsstaaten :
**AT BE CH DE ES FR GB IT LI NL SE**

(56) Entgegenhaltungen :
**EP-A- 0 187 275**
**DE-A- 2 107 560**
**DE-A- 2 658 118**
**FR-A- 2 460 971**
**US-A- 3 766 156**
**US-A- 3 980 800**
**US-A- 4 444 971**

(73) Patentinhaber : **SANDOZ-PATENT-GMBH**
**Humboldtstrasse 3**
**W-7850 Lörrach (DE)**
(84) **DE**

Patentinhaber : **SANDOZ AG**
**Lichtstrasse 35**
**CH-4002 Basel (CH)**
(84) **BE CH ES FR GB IT LI NL SE**

Patentinhaber : **SANDOZ-ERFINDUNGEN Verwaltungsgesellschaft m.b.H.**
**Brunner Strasse 59**
**A-1235 Wien (AT)**
(84) **AT**

(72) Erfinder : **DANNER, Bernard**
**8 bis, rue du Beau-Site**
**F-68400 Riedisheim (FR)**

EP 0 349 629 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die DE-OS-2 658 118 beschreibt Gäßrige Harzdispersionen für hitzehätbare Überzugsmittel, die Verbindungen mit ampho-ionischer Struktur enthalten.

Aus den US-Patenten 3 689 468, 3 766 156 und 4 009 201 sind bestimmte polyquaternäre (Meth)acrylsäureesterderivate, und Polymerisationsprodukte davon, bekannt; aus der Britischen Patentanmeldung GB 2 056 997 A und aus der Europäischen Patentschrift EP 0 156 646 B1 sind bestimmte polyquaternäre (Meth)acrylamidderivate, und Polymerisate davon, bekannt; in der Japanischen Kokai 49-97782 sind Umsetzungsprodukte von Polyacrylsäuren mit unsubstituierten Polyaminen beschrieben, wobei unter den genannten Reaktionsbedingungen die Umsetzung im wesentlichen eine Salzbildung ist und, wenn unter den energischeren Reaktionsbedingungen eine Amidierung als Nebenreaktion vorkommt, diese in hohem Masse zu Vernetzungen führt; aus den US-A-3 980 800 und 4 444 971 sind Kationische, seitenkettenhaltige Vinylcopolymere bekannt, die bestimmte Gruppen mit aminoalkyliertem Amidostickstoff enthalten. In diesen Dokumenten ist die Verwendung der Polymeren für die Papierherstellung erwähnt; in den US-Patenten, in der EP 0 156 646 B1 und in der Japanischen Kokai 49-97782 ist auch die Verwendung der Polymeren als Flockungsmittel erwähnt. Der vorliegenden Erfindung liegt die Aufgabe zugrunde, Polymere zur Verfügung zu stellen, die wertvolle Flokkungsmittel und besonders wirksame Retentions- und Entwässerungshilfsmittel für die Herstellung von Papier darstellen. Diese Aufgabe wird mit den unten definierten Copolymeren hervorragend gelöst.

Insbesondere wurde gefunden, dass unter Verwendung der unten definierten kationischen seitenkettenhaltigen Vinylcopolymeren die Behandlung von unreinem Wasser und wässrigen Suspensionen, insbesondere von Zellstoffsuspensionen zur Herstellung von Papier, bedeutend rationalisiert werden kann, da mit bereits sehr kleinen Mengen der genannten Copolymeren eine hervorragende Fällungs- bzw. Flockungswirkung erreicht werden kann.

Die Erfindung betrifft die kationischen Copolymeren, deren Herstellung und Verwendung, sowie die entsprechenden polykationischen Monomeren und deren Herstellung.

Ein erster Gegenstand der Erfindung sind also kationische, mit Wasser verdünnbare seitenkettenhaltige Vinylcopolymeren, die durch einen Gehalt an Gruppen ($\gamma$) der Formel

$$-X\text{-}Alk\text{-}Y- \qquad (I),$$

worin

Alk Alkylen mit 2 bis 6 Kohlenstoffatomen, hydroxysubstituiertes Alkylen mit 3 bis 6 Kohlenstoffatomen oder durch -O- unterbrochenes Alkylen mit 4-6 Kohlenstoffatomen,

X eine basische Aminogruppe oder eine Ammoniumgruppe

und

Y eine basische -NH-Gruppe oder ein Säureaddukt davon

bedeuten, wobei eines von X und Y weiter an einen gegebenenfalls substituierten aliphatischen oder heteroaromatischen Kohlenwasserstoffrest und das andere an Wasserstoff oder an einen gegebenenfalls substituierten aliphatischen Kohlenwasserstoffrest gebunden sind,

in mindestens einem Teil der Seitenketten gekennzeichnet sind, wobei mindestens 1 Mol% der einpolymerisierten Comonomereinheiten solche ($\gamma$)haltige Seitenketten tragen.

Die erfindungsgemässen Copolymeren sind kationisch, d.h. sie sind aus kationischen und gegebenenfalls nicht-ionogenen Comonomereinheiten aufgebaut und sind im wesentlichen frei von anionischen und von amphoteren Comonomereinheiten. Als kationisch werden hier sowohl quaternäre und protonierte Ammoniumgruppen und -verbindungen verstanden als auch basische Aminogruppen und -verbindungen, die in wässrigem saurem Medium zu Ammoniumgruppen bzw. -verbindungen protonierbar sind.

Steht in der Formel (I) Alk für Alkylen mit 2-6 Kohlenstoffatomen, so kann dieses ein Di- bis Hexamethylen darstellen oder kann, wenn es 3-6 Kohlenstoffatome enthält, gegebenenfalls auch verzweigt sein, wobei zwischen X und Y mindestens 2 Kohlenstoffatome Abstand vorhanden sind. Steht Alk für hydroxysubstituiertes Alkylen mit 3-6 Kohlenstoffatomen, dann befindet sich die Hydroxygruppe vorteilhaft am 2- oder 3-ständigen Kohlenstoffatom vom nächsten Stickstoffatom aus gezählt; vorzugsweise ist eine einzige Hydroxygruppe vorhanden und das hydroxysubstituierte Alkylen ist insbesondere ein Alkylen mit 3 oder 4 Kohlenstoffatomen, worin die Hydroxygruppe sich in 2-Stellung befindet (insbesondere 2-Hydroxypropylen-1,3, 2-Hydroxybutylen-1,4 und 2-Hydroxy-2-methyl-propylen-1,3). Steht Alk für durch -O- unterbrochenes (vorzugsweise durch ein -O-unterbrochenes) $C_{4-6}$-Alkylen, dann sind vorteilhaft mindestens 2 Kohlenstoffatome Abstand zwischen -O- und N; vorzugsweise steht Alk in diesem Fall für $-CH_2\text{-}CH_2\text{-}O\text{-}CH_2CH_2-$.

Bevorzugt steht Alk für $Alk_1$, d.h. für Alkylen mit 2-4 Kohlenstoffatomen, insbesondere Aethylen, Propylen-1,2 oder -1,3 oder Butylen-1,2 oder -1,4, worunter Aethylen und Propylen-1,3 besonders bevorzugt sind.

Das Symbol X stellt eine basische Aminogruppe oder eine Ammoniumgruppe dar, d.h. bedeutet ein Stickstoffatom, das ausschliesslich an einen oder mehrere aliphatische Kohlenwasserstoffreste und gegebenenfalls heteroaromatische Kohlenwasserstoffreste und gegebenenfalls an Wasserstoff gebunden ist, wobei das stickstoffgebundene Kohlenstoffatom insbesondere einem Alkyl-, Alkenyl-, Alkylen- oder Alkenylenrest angehören kann, eine allfällige weitere Substitution dieser Alkyl-, Alkenyl-, Alkylen- oder Alkenylengruppen ist von untergeordneter Bedeutung, soweit sie die Basizität der Aminogruppe nicht wesentlich beeinträchtigt (wenn X eine Ammoniumgruppe bedeutet, gilt diese Definition für die entsprechende nichtprotonierte und nicht-quaternierte Form davon); insbesondere ist es bevorzugt, dass diese Kohlenwasserstoffreste keine anionischen Gruppen (d.h. Säuregruppen gegebenenfalls in Salzform) als Substituenten tragen. Gegebenenfalls kann X insbesondere auch einen Stickstoff darstellen, der Bestandteil eines Heterozyklus ist und gegebenenfalls quaterniert ist.

Das Symbol Y stellt eine basische -NH-Gruppe oder ein Säureaddukt davon dar. Sie ist also, ausser an Alk, entweder an Wasserstoff oder an einen aliphatischen Kohlenwasserstoffrest, wie vorher für X definiert, gebunden.

Der Rest (γ) der Formel (I) entspricht der Formel

$$-X\text{-}Alk\text{-}NH- \qquad (Ia)$$

oder einem Säureaddukt davon,
vorzugsweise der Formel

$$-X\text{-}Alk_1\text{-}NH- \qquad (Ib),$$

worin $Alk_1$ $C_{2-4}$-Alkylen bedeutet,
oder einem Säureaddukt davon.

Die an basische, protonierte oder quaternierte Aminogruppen X gebundenen Reste -Alk-NH- bzw. -$Alk_1$-NH- (als Base oder in protonierter Form) werden vornehmlich durch Aminoalkylierung einer entsprechenden basischen gegebenenfalls protonierten Aminogruppe eines Ausgangspolymeren oder des entsprechenden Monomeren eingeführt.

Das Verfahren zur Herstellung der erfindungsgemässen Vinylcopolymeren ist dadurch gekennzeichnet, dass man

(α) ein entsprechendes, kationisches, mindestens eine basische Aminogruppe enthaltendes Vinylpolymeres und/oder ein Säureaddukt davon am basischen gegebenenfalls protonierten Stickstoff zur Bildung von mindestens einem Rest (γ) aminoalkyliert,

oder

(β) mindestens eine Gruppe (γ) der Formel (I) enthaltende Vinylcomonomeren (Vm1), gegebenenfalls zusammen mit weiteren Vinylcomonomeren welche
(Vm2): nicht-ionogene Comonomeren,
oder
(Vm3): kationische Comonomeren, die keine (γ)-Gruppen enthalten, oder
Gemische von zwei oder mehreren solcher Comonomeren (Vm2) und (Vm3) sind,
radikalisch copolymerisiert.

Als kationische, mindestens eine basische (gegebenenfalls protonierte) Aminogruppe enthaltende Vinylpolymeren - welche als Ausgangspolymeren in der Verfahrensvariante (α) geeignet sind - kommen im wesentlichen solche in Betracht, die an der Kohlenwasserstoffhauptkette Seitensubstituenten tragen und mindestens ein Seitensubstituent einen basischen gegebenenfalls protonierten Stickstoff enthält. Die basischen Aminogruppen können insbesondere durch die Formel -NAB symbolisiert werden, worin A und B jeweils Wasserstoff oder einen über ein aliphatisches oder heteroaromatisches Kohlenstoffatom an das N-Atom gebundenen aliphatischen, araliphatischen oder heteroaromatischen Substituenten bedeuten. Die Symbole A und B stehen jeweils vorteilhaft entweder für Wasserstoff oder für einen Substituenten, welcher $C_{1-4}$-Alkyl ist, oder A kann Teil eines heteroaliphatischen Ringes sein, wovon der A- und B-gebundene Stickstoff das oder ein Heteroatom darstellt, oder es können A und B, zusammen mit dem Stickstoff, an welchen sie gebunden sind, unter Einbezug der weiteren Bindung einen heteroaromatischen Zyklus bilden, der direkt oder über ein Brückenglied an die Polyvinylhauptkette gebunden ist.

Die Ausgangspolymeren können, insbesondere als solche definiert werden, die aus wiederkehrenden Einheiten folgender Formeln

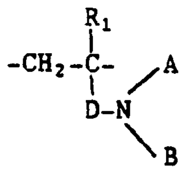

(IIa)

und gegebenenfalls

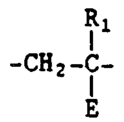

(IIb)

aufgebaut sind, worin

$R_1$ Wasserstoff oder Methyl,

D eine Gruppe, die, gegebenenfalls unter Einbezug von A und gegebenenfalls B zur Bildung eines Heteroringes, die basische Aminogruppe mit der Hauptkette verbindet

und

E einen nicht-ionogenen vorzugsweise polaren Substituenten bedeuten,

wobei die basischen Aminogruppen gegebenenfalls protoniert sind.

Die erfindungsgemäss einzusetzenden Ausgangspolymeren, welche insbesondere durch die wiederkehrenden Einheiten (IIa) und gegebenenfalls (IIb) gekennzeichnet sind und vorzugsweise im wesentlichen daraus bestehen, sind vornehmlich (Co)polymerisationsprodukte von Monomeren der (Meth)acrylreihe, der (Meth)allylreihe und/oder der vinylsubstituierten heterozyklischen Reihe und gegebenenfalls der Vinylätherreihe.

Die Ausgangsvinylpolymeren der Verfahrensvariante (α) sind vornehmlich Homo- oder Copolymeren von kationischen Vinylmonomeren der Formel

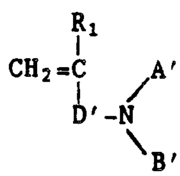

(IIIa),

worin A′, B′ und D′ den Bedeutungen von A, B bzw. D entsprechen oder, wenn sie durch die radikalische Polymerisation verändert werden, der entsprechenden monomeren Vorstufe davon entsprechen, und die basische Aminogruppe gegebenenfalls protoniert ist,

und gegebenenfalls nicht-ionogenen Vinylcomonomeren der Formel

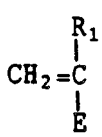

(IIIb),

vorzugsweise Homo- oder Copolymeren von einem oder mehreren der Monomeren der folgenden Formeln (IV) bis (VII)

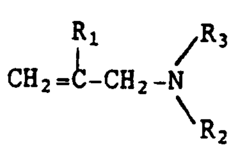

(IV),

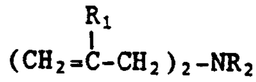

(V),

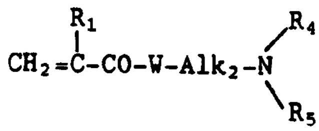

(VI),

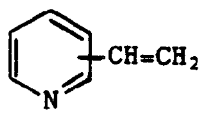

(VII),

welche gegebenenfalls protoniert sind,
oder Copolymeren von einem oder mehreren der genannten Monomeren der Formeln (IV) bis (VII) mit mindestens einem nicht-ionogenen Comonomeren der Formeln (VIII) bis (XI)

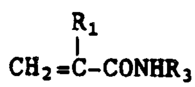

(VIII),

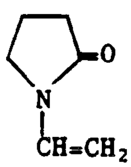

(IX),

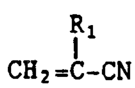

(X),

$CH_2=CH-O-R_6$ (XI),

worin

$R_1$ jeweils Wasserstoff oder Methyl,
$R_2$ jeweils Wasserstoff, $C_{1-8}$-Alkyl oder Benzyl,
$R_3$ jeweils Wasserstoff oder $C_{1-2}$-Alkyl,
$R_4$ Wasserstoff oder $C_{1-2}$-Alkyl,
$R_6$ $C_{1-6}$-Alkyl,
$R_6$ $C_{1-2}$-Alkyl,
$Alk_2$ $C_{2-6}$-Alkylen oder hydroxysubstituiertes $C_{3-6}$-Alkylen

und

W -O- oder -NH-

bedeuten.

Darunter sind Homo- und Copolymeren von Monomeren der Formeln (IV) bis (VI), insbesondere (V) und (VI), oder vornehmlich Copolymeren davon mit nicht-ionogenen Comonomeren insbesondere solchen der Formel (VIII) bevorzugt.

Die Aminoalkylierung der Ausgangspolymeren in der Verfahrensvariante ($\alpha$) erfolgt vorzugsweise durch

Umsetzung der Ausgangspolymeren mit mindestens einer Verbindung der Formel

Hal-$Alk_3$-NH-R (I'),

worin

$Alk_3$ $C_{2-6}$-Alkylen oder durch -O- unterbrochenes $C_{4-6}$-Alkylen,

Hal Halogen,

R Wasserstoff, einen über ein aliphatisches Kohlenstoffatom an die NH-Gruppe gebundenen Kohlenwasserstoffrest mit 1-8 Kohlenstoffatomen oder einen durch -O- oder -NR'- unterbrochenen Kohlenwasserstoffrest mit 4 bis 8 Kohlenstoffatomen

und

R' Wasserstoff oder $C_{1-2}$-Alkyl

bedeuten.

Halogen steht vorzugsweise für Chlor oder Brom und befindet sich vorteilhaft in einer der Stellungen β bis ω des $C_{2-6}$-Alkylenrestes bzw. in ω des durch -O- unterbrochenen $C_{4-6}$-Alkylenrestes.

Wenn R nicht Wasserstoff bedeutet, steht es vorzugsweise für $C_{1-4}$-Alkyl, insbesondere Methyl, Aethyl, n- oder iso-Propyl oder n-Butyl, oder für einen Rest der Formel

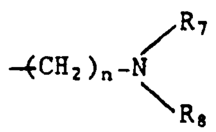 (XII),

worin

$R_7$ und $R_8$ jeweils Wasserstoff oder $C_{1-2}$-Alkyl

oder

$R_7$ und Rb zusammen mit dem N-Atom an welches sie gebunden sind einen altphatischen Heterozyklus mit 4-5 Kohlenstoffatomen

und

n 2 oder 3

bedeuten.

Vorteilhaft steht R für Wasserstoff.

Besonders bevorzugt wird als Verbindung der Formel (I') β- bis ω-Chlor- oder -Brom-($C_{2-4}$-alkyl)-amin eingesetzt.

Nach der Variante (β) werden Vinylcomonomeren (Vm1), die mindestens eine Gruppe der Formel (I) als Bestandteil des Moleküls enthalten, zur radikalischen Copolymerisation, gegebenenfalls zusammen mit weiteren Vinylcomonomeren (Vm2 ) und/oder (Vm3 ), eingesetzt.

Als kationische Vinylcomonomeren (Vm3) kommen vorteilhaft solche in Betracht, wie sie zur Herstellung der Ausgangspolymeren der Verfahrensvariante (α) geeignet sind, vornehmlich solche der Formel (IIIa), worunter diejenigen der Formeln (IV) bis (VII), insbesondere (V) und (VI) bevorzugt sind.

Als nicht-ionogene Vinylcomonomeren (Vm2) kommen vorteilhaft solche der Formel (IIIb) in Betracht, worunter diejenigen der Formeln (VIII) bis (XI), insbesondere (VIII) bevorzugt sind.

Die die Gruppe der Formel (I) enthaltenden Vinylmonomeren (Vm1) sind durch Aminoalkylierung entsprechender Ausgangsvinylmonomeren, die mindestens eine basische Aminogruppe oder ein Säureaddukt davon enthalten, vorteilhaft von solchen der Formel (IIIa) erhältlich und können insbesondere durch die Formel

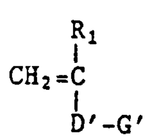 (IIIc)

dargestellt werden, worin G' die durch Aminoalkylierung durch Einführung von mindestens einer Gruppe Alk-N zur Bildung von mindestens einer Gruppe (γ), insbesondere mindestens einer Teilstruktur der Formel

N-Alk-N-Alk-NH- ($\gamma_2$),

modifizierte Aminogruppe des Ausgangsmonomeren, insbesondere die durch Aminoalkylierung der Gruppe -NA'B' in Verbindungen der Formel (IIIa) erhältliche Gruppe, bedeutet.

Die Aminoalkylierung der Ausgangsmonomeren kann z.B. in einer Stufe durch Umsetzung mit einer Verbindung der Formel (I′) erfolgen oder auch in zwei Stufen durch Umsetzung des Ausgangsmonomeren erst mit einem entsprechenden Dihalogen-($C_{2-6}$-alkan), $C_{4-6}$-Di(halogenalkyl)äther oder $C_{3-6}$-Halogenepoxyalkan und dann mit einer Aminoverbindung z.B. der Formel $RNH_2$ oder einem Säureaddukt davon.

Bevorzugte aminoalkylierte Vinylmonomeren sind solche, die mindestens eine gegebenenfalls protonierte N-$Alk_1$-NH-Gruppe enthalten.

Bevorzugte aminoalkylierte Vinylmonomeren sind insbesondere solche, die durch Aminoalkylierung von Verbindungen der Formeln (IV), (V), (VI) oder (VII) unter Einführung von N-gebundenen Resten -Alk-NHR, vornehmlich -$Alk_1$-NH, besonders unter Bildung von Teilstrukturen der Formel -N-$Alk_1$-N-$Alk_1$-NHR, gegebenenfalls in protonierter Form,- wobei Alk, $Alk_1$und R wie oben definiert sind, erhältlich sind.

Vorteilhaft wird mit einem einen Rest der Formel -Alk-$NH_2$ abgebenden Aminoalkylierungsmittel aminoalkyliert.

Bezeichnet man im erfindungsgemässen Vinylcopolymeren mit G die durch Aminoalkylierung einer basischen, gegebenenfalls protonierten Aminogruppe durch Einführung von mindestens einer gegebenenfalls protonierten Gruppe -Alk-NH- erhaltene (γ)haltige Amino- oder Ammoniumgruppe, so können die erfindungsgemässen Vinylcopolymeren als solche definiert werden, die, vorteilhaft, wiederkehrende Einheiten der Formel

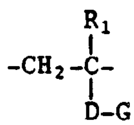 (IIc),

gegebenenfalls neben Comonomereinheiten der Formeln (IIa) und/oder (IIb) enthalten oder vorzugsweise daraus bestehen.

Die Gruppe G, welche einen basischen Aminostickstoff oder Ammoniumstickstoff mit Mono- bis Poly-(amino-Alk)- und/oder -(ammonium-Alk)-Substitution bedeutet [wobei jeder Stickstoff in G nur an aliphatische und gegebenenfalls heteroaromatische Kohlenwasserstoffreste und gegebenenfalls an Wasserstoffatome covalent gebunden ist, und mindestens ein -Alk-NH-, gegebenenfalls in protonierter Form

(d.h. als 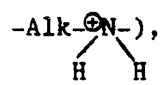),

in G enthalten ist], ist vorzugsweise eine solche, die aus der Aminoalkylierung durch Einführung von -Alk-N- bzw. -Alk-NH- von gegebenenfalls protonierten Aminogruppen

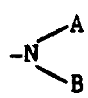

oder aus der Copolymerisation der G′-haltigen Monomeren stammt.

Durch die Aminoalkylierung der basischen (gegebenenfalls protonierten) Aminogruppen der Ausgangsvinylmono- oder -polymeren werden Reste -Alk-NH- an diese Aminogruppen gebunden; diese Reste, welche wiederum eine alkylierbare Aminogruppe enthalten, können, je nach Reaktivität und Aminoalkylierungsbedingungen, auch aminoalkyliert werden, so dass durch die Aminoalkylierung zur Einführung von Resten der Formel (I) einzelne Reste Alk-NH, über N kettenverlängerte Reste Alk-N oder auch ein Geäst aminoalkylierter Aminogruppen entstehen können; dabei können eine oder mehrere der folgenden, sich gegebenenfalls wiederholenden, Verknüpfungen und/oder Verzweigungen vorkommen:

~*N-Alk-N~ , 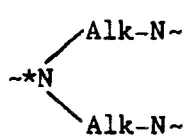 , 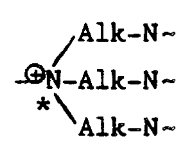 .

(a) (b) (c)

worin

das mit "*" bezeichnete Stickstoffatom entweder ein Stickstoffatom des Ausgangsmono- oder -polymeren oder ein Stickstoffatom eines anschliessenden weiteren Aminoalkyl- oder Ammoniumalkylrestes -Alk-N*~ ist,

das Symbol "~" die weiteren Bindungen zu Wasserstoff und/oder anderen Resten wie oben oder auch weiter unten beschrieben bedeutet,

mindestens eine basische -NH-Gruppe in der durch die Aminoalkylierung erhaltenen Gruppe G vorhanden ist

und die basischen Stickstoffatome gegebenenfalls protoniert sind.

Bezeichnet man mit $A_o$ die Bedeutungen von A bzw. A′ mit Ausnahme von Wasserstoff und mit $B_o$ die Bedeutungen von B bzw. B′ mit Ausnahme von Wasserstoff, so können die durch Aminoalkylierung der gegebenenfalls protonierten Aminogruppen

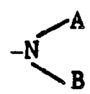

bzw.

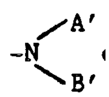

entstehenden möglichen Verknüpfungen und Verzweigungen hauptsächlich wie folgt schematisiert werden:

-NH-Alk-N~ , 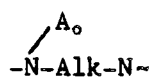 , 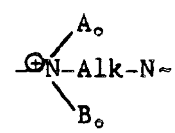 ,

(d) (e) (f)

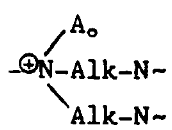 , 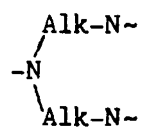 und (c)

(g) (h)

wobei basische Stickstoffatome gegebenenfalls protoniert sind.

Die durch Aminoalkylierung zur Einführung von Alk-NHR-Resten entstehenden Verknüpfungen und Verzweigungen können durch folgende Formeln schematisiert werden:

~*N-Alk-$NH_2$ , ~*N-Alk-NH-Alk-N~ , 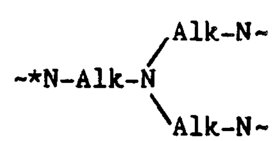

(i) (j) (k)

~*N-Alk-$NHR_o$ , 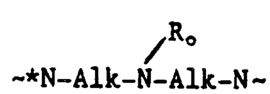 , 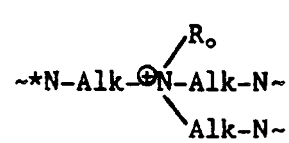

(l) (m) (n)

und

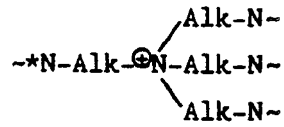

(p)

worin

$R_o$ die Bedeutungen von R mit Ausnahme von Wasserstoff aufweist und worin eine in diesem Rest vorkommende alkylierbare Aminogruppe -NR'- gegebenenfalls auch aminoalkyliert sein kann,
und die basischen Stickstoffatome gegebenenfalls protoniert sind. Bezeichnet man mit $G_o$ den durch Aminoalkylierung eingeführten Rest, so können die durch Aminoalkylierung der gegebenenfalls protonierten Aminogruppen

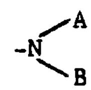

bzw.

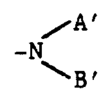

entstehenden Reste G durch folgende Formeln dargestellt werden:

$-NHG_o$ , 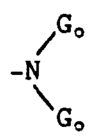 , 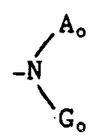 , 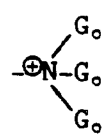 , 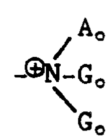 und 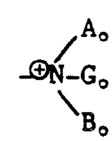 ,

(1) (2) (3) (4) (5) (6)

wobei basische Stickstoffe gegebenenfalls protoniert sind.

Unter den Resten (1) bis (6) sind die Reste (3), (5) und (6) bevorzugt.

Als Gegenion zu den quaternären und protonierten Gruppen ist vorteilhaft ein Anion $Z^{\ominus}$, insbesondere wie weiter unten definiert, vorhanden.

Vorteilhaft enthalten die durch Aminoalkylierung mit Verbindungen der Formel (I') erhaltenen Gruppen G eine oder mehrere, insbesondere durchschnittlich mindestens 2, vorteilhaft 4 bis 10 $Alk_3$-N-Einheiten pro Rest G; vornehmlich so, dass mindestens eine Teilstruktur der Formel

$$N\text{-}Alk_3\text{-}N\text{-}Alk_3\text{-}NH\text{-} \qquad (\gamma_2')$$

pro Rest G entsteht, bzw. mindestens ein $G_o$ solch eine Teilstruktur enthält. Vorzugsweise steht $Alk_3$ dabei für $Alk_1$.

Durch die zweistufige Aminoalkylierung wird vorteilhaft nicht mehr als ein Rest -Alk-NH- pro aminoalkylierbare Aminogruppe des Ausgangsmonomeren eingeführt.

Besonders bevorzugte aminoalkylierte Vinylmonomeren entsprechen den folgenden Formeln:

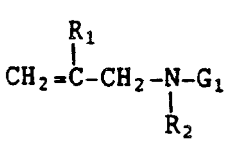 $(IV_{a1})$ 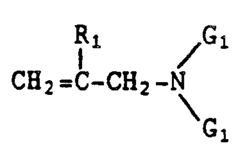 $(IV_{a2})$

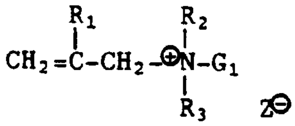 ($IV_{a3}$)

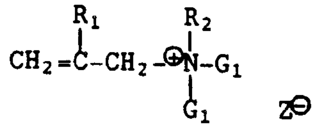 ($IV_{a4}$)

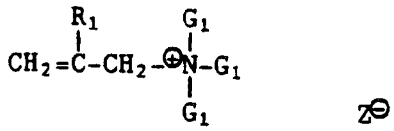 ($IV_{a5}$)

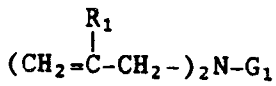 ($V_{a1}$)

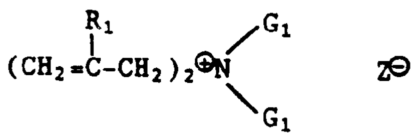 ($V_{a2}$)

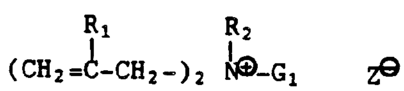 ($V_{a3}$)

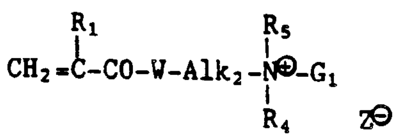 ($VI_{a1}$)

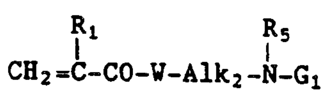 ($VI_{a2}$)

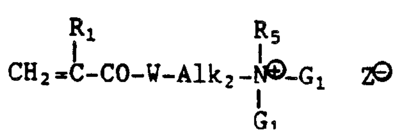 ($VI_{a3}$)

oder

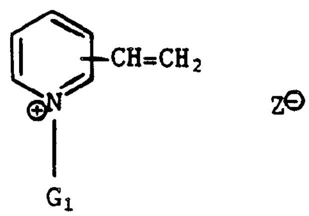

$(VII_a)$

worin $G_1$ der durch Mono- oder Oligoaminoalkylierung mit einem den Rest $-Alk_1-NH_2$ abgebenden Aminoalkylierungsmittel entstehende Rest ist, und $Z^{\ominus}$ ein Gegenion, vorzugsweise $Hal^{\ominus}$ ist, wobei $Hal^{\ominus}$ vorzugsweise Bromid oder Chlorid bedeutet.

Die bevorzugten erfindungsgemässen Copolymeren enthalten vorteilhaft wiederkehrende Einheiten der folgenden Formeln

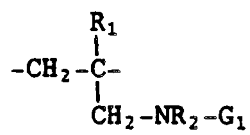

$(IV_{b1})$

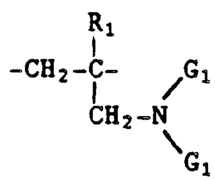

$(IV_{b2})$

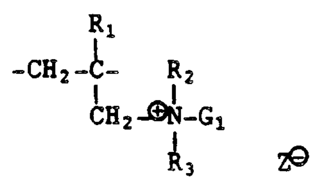

$(IV_{b3})$

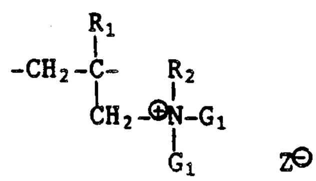

$(IV_{b4})$

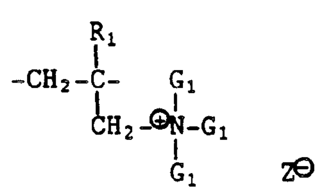

$(IV_{b5})$

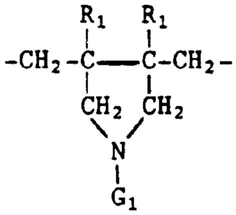

$(V_{b1})$

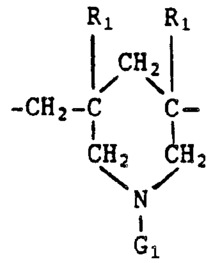

$(V_{b1}')$

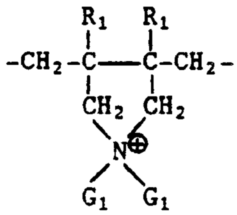

$(V_{b2})$

$Z^{\ominus}$

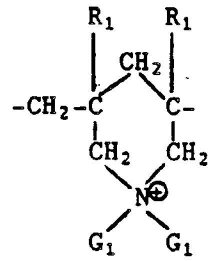

$Z^{\ominus}$

$(Vb_2')$

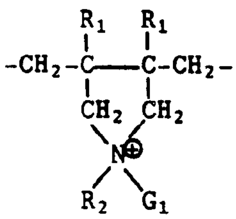

$(V_{b3})$

$Z^{\ominus}$

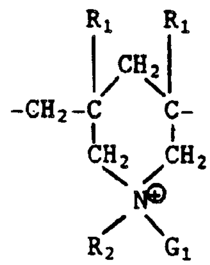

$Z^{\ominus}$

$(V_{b3}')$

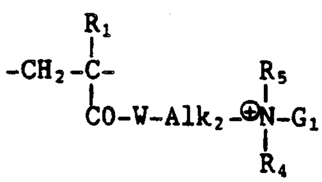

$(VI_{b1})$

$Z^{\ominus}$

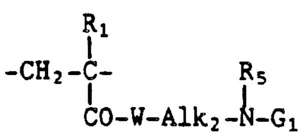

$(VI_{b2})$

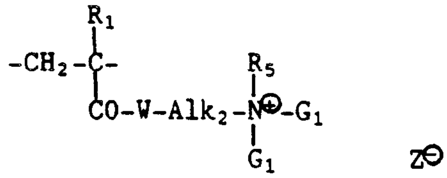

(VI$_{b3}$)

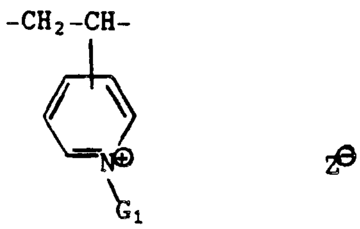

(VII$_b$),

vorteilhaft neben wiederkehrenden Einheiten der Formeln

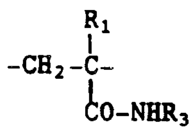

(VIII$_b$)

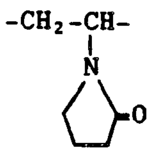

(IX$_b$)

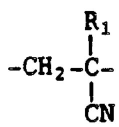

(X$_b$)

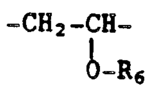

(XIb)

und/oder der Formeln

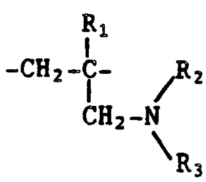

(IV$_c$)

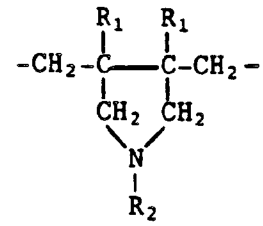

$(V_c)$

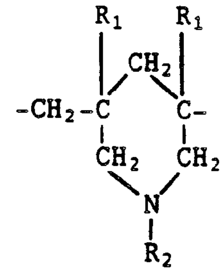

$(V_c')$

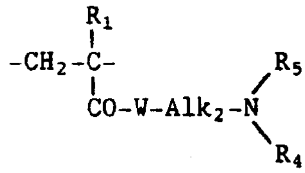

$(VI_c)$

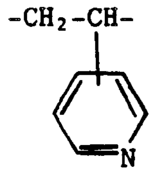

$(VII_c)$,

wobei in den Formeln $(IV_a)$ bis $(VII_b)$ und $(IV_c)$ bis $(VII_c)$ vorkommende basische Stickstoffatome gegebenenfalls protoniert sein können. In den Formeln $(VI_{a1})$, $(VI_{a2})$ und $(VI_{a3})$ steht $R_1$ vorzugsweise für Methyl.

Die erfindungsgemässen Polymeren sind Vinylcopolymeren, die mindestens 1 Mol% einpolymerisierter, (γ)-haltiger Vinylcomonomereinheiten enthalten. Sie sind aus mindestens zwei verschiedenen Monomereinheiten aufgebaut, insbesondere:
aus zwei oder mehr verschiedenen kationischen (γ)-haltigen Comonomereinheiten, insbesondere entsprechend der Formel (IIc),
oder vorzugsweise
aus kationischen (γ)-haltigen Comonomereinheiten, insbesondere entsprechend der Formel (IIc), und kationischen Comonomereinheiten die keine (γ)-Gruppe enthalten, insbesondere entsprechend der Formel (IIa),
oder aus kationischen (γ)-haltigen Comonomereinheiten, insbesondere entsprechend der Formel (IIc), und nicht-ionogenen Comonomereinheiten, insbesondere entsprechend der Formel (IIb),
oder besonders bevorzugt
aus kationischen (γ)-haltigen und nicht-(γ)-haltigen Comonomereinheiten und nicht-ionogenen Comonomereinheiten, insbesondere entsprechend den Formeln (IIa), (IIb) und (IIc).

Ist (IIa) vorhanden, so stammt dieses vorzugsweise aus der nicht-erschöpfenden Aminoalkylierung des Eduktes für die Herstellung von (IIc).

Der Gehalt an (γ)-haltigen einpolymerisierten Monomereinheiten, insbesondere der Formel (IIc), beträgt im Durchschnitt vornehmlich mindestens 2 Mol%, vorteilhaft 2 bis 80 Mol%, vorzugsweise mindestens 5 Mol%, insbesondere 5 bis 50 Mol% der gesamten einpolymerisierten Monomereinheiten im Copolymeren. Von den aminoalkylierbaren Aminogruppen des Ausgangsmonomeren sind im Polymeren vorteilhaft 2-100 Mol%, vorzugsweise 5-80 Mol%, insbesondere 10-50 Mol% erfindungsgemäss aminoalkyliert, wobei die Aminoalkylierung vorzugsweise auch so forciert werden kann, dass die durch die Aminoalkylierung eingeführte Aminogruppe wiederum aminoalkyliert wird, so dass nicht nur monoaminoalkylierte sondern auch oligo- und polyaminoalkylierte Aminogruppen entstehen. Darunter sind die mono- und oligoaminoalkylierten Derivate, insbesondere mit mindestens 2, vorteilhaft 4 bis 10 Alk-N-Einheiten pro eingebauten Rest G bevorzugt. Die nicht-ionogenen Comonomereinheiten betragen vorteilhaft durchschnittlich bis zu 95 Mol%, vorzugsweise bis zu 90 Mol%, insbesondere 10 bis 90 Mol% der gesamten Comonomereinheiten im Copolymeren.

Zur Aminoalkylierung wird vorteilhaft so verfahren, dass insgesamt 0,5 bis 10, vorzugsweise 1 bis 5 Mol Aminoalkylierungsmittel, insbesondere der Formel (I'), pro Mol aminoalkylierbarer Aminogruppen des Ausgangspolymeren bzw. des gesamten Monomeren eingesetzt werden.

Die Aminoalkylierung mit Verbindungen der Formel (I') erfolgt vorteilhaft in wässrigem Medium, unter neutralen bis alkalischen Bedingungen und im Temperaturbereich von 30°C bis Rückflusstemperatur und kann bis

zur Bildung von Kettenverlängerungen und Verzweigungen, wie oben mit den Formeln (a) bis (p) und (1) bis (6) gezeigt, führen.

Die Aminoalkylierung der Ausgangspolymeren gemäss der Verfahrensvariante ($\alpha$) erfolgt vorteilhaft im pH-Bereich von 7-10 und im Temperaturbereich von 30-100°C, vorzugsweise 40-60°C; die Konzentration des wässrigen Reaktionsmediums wird vorteilhaft so gewählt, dass das Reaktionsgemisch noch gut rührbar ist und kann aber auch ziemlich verdünnt sein; günstigerweise wählt man die Konzentration des Reaktionsgemisches so, dass der Trockenstoffgehalt bei der Aminoalkylierungsreaktion mindestens 1 Gew.%, insbesondere 2-50 Gew.%, vorteilhaft 2-30 Gew.%, vorzugsweise mindestens 5 Gew.% beträgt.

Für die einstufige Aminoalkylierung der Monomeren wird vorteilhaft ein Temperaturbereich von 40-100°C, vorzugsweise 50 bis 80°C, gewählt und der pH wird vorteilhaft im Bereich von 7-14, vorzugsweise 8-13, gehalten. Die Konzentration des wässrigen Reaktionsmediums kann bei der Aminoalkylierung der Monomeren auch höher gewählt werden, als bei der Aminoalkylierung der Polymeren, da die wässrigen Monomerlösungen im allgemeinen nicht besonders viskos sind, und beträgt insbesondere 10-80 Gew.%, vorzugsweise 30 bis 70 Gew.%.

Für die zweistufige Aminoalkylierung der Monomeren wird die Umsetzung mit dem Dihalogenalkan oder dem Di-(haloalkyl)äther vorteilhaft wasserfrei durchgeführt, wobei pro Mol Monomer mindestens ein Mol Dihalogenalkan bzw. Di(haloalkyl)äther, vorzugsweise 5-20 Mol Dihalogenalkan bzw. Di(haloalkyl)äther eingesetzt werden; die Reaktionstemperatur liegt vorteilhaft im Bereich von 50°C bis Rückflusstemperatur. Die Umsetzung des Ausgangsmonomeren mit dem Halogenepoxyalkan erfolgt vorteilhaft im Molverhältnis von 1:0,8 bis 1:1, entweder unter wasserfreien Bedingungen, vorteilhaft im Temperaturbereich von 20-50°C, oder in wässrigem stark saurem Medium, insbesondere bei pH 1-3, vorteilhaft im Temperaturbereich von 80-100°C. Die Weiterumsetzung mit Ammoniak oder einem Amin erfolgt vorteilhaft unter Verwendung von 5-10 Mol Ammoniak oder Amin pro Mol umzusetzendes Halogen, in Abwesenheit von Wasser oder sonstigen Lösungsmitteln und vorteilhaft im Temperaturbereich von 20-60°C. Die Anlagerung einer Aminoverbindung an eine Epoxygruppe erfolgt vorteilhaft unter den oben beschriebenen Bedingungen.

Bei der Aminoalkylierung von Monomeren der Formel (VI) bedeutet $R_1$ vorteilhaft Methyl.

Durch die zweistufige Aminoalkylierung wird vornehmlich nicht mehr als ein Rest der Formel (I), insbesondere nicht mehr als ein Rest -Alk-N, pro aminoalkylierbare Aminogruppe des Monomeren eingeführt.

Die Polymerisationsreaktion gemäss der Verfahrensvariante ($\beta$) kann im allgemeinen unter üblichen Polymerisationsbedingungen erfolgen, wie sie für die Herstellung von Vinylpolymeren verwendet werden, vorzugsweise in Lösung, insbesondere in wässriger Lösung, vorteilhaft im Temperaturbereich von 20-100°C, vorzugsweise 40-80°C und unter sauren Bedingungen, vorteilhaft bei pH 1-5, vorzugsweise 2-4, zweckmässig in Gegenwart eines geeigneten Polymerisationsinitiators und vorteilhaft bei solchen Konzentrationen, dass das Reaktionsgemisch auch bei erfolgter Polymerisation noch gut rührbar ist, insbesondere bei Konzentrationen von mindestens 2 Gew.% Trockenstoffgehalt, vorzugsweise mindestens 5 Gew.% Trockenstoffgehalt im wässrigen Reaktionsgemisch; gewünschtenfalls kann auch ein Polymerisationsregler eingesetzt werden.

Als Polymerisationsinitiatoren können z.B. solche eingesetzt werden, die unter thermischer Zersetzung freie Radikale bilden, oder auch ein Redox-System; besonders bevorzugt werden Initiatoren der Azoreihe eingesetzt, insbesondere solche, die eine Gruppe mit kationischem Stickstoff enthalten, vorzugsweise solche der Formel

$$(R_9 - N = N - R_{10})^{\oplus} L^{\ominus} \qquad \text{(XIII)}$$

worin $R_9$ und $R_{10}$ unabhängig voneinander für eine gegebenenfalls substituierte Alkyl-, Aryl-, Alkaryl-, Aralkyl-, Cyanalkyl-, Cyanaryl-, Cyanalkaryl- oder Cyanaralkylgruppe stehen und mindestens eines davon ein kationisiertes Stickstoffatom enthält, oder $R_9$ und $R_{10}$ zusammen eine Alkylen-, Alkylalkylen- oder Arylalkylengruppe bilden, die mindestens ein kationisiertes Stickstoffatom enthält, und $L^{\ominus}$ ein Anion darstellt. Bevorzugt werden Initiatoren der genannten Formel, in denen mindestens einer der Reste $R_9$ und $R_{10}$ eine protonierte Aminoalkyl-, Aminoaryl-, Amidinoalkyl-, Amidinoaryl-, Aminoalkaryl-, Aminoaralkyl-, Amidinoalkaryl-, Amidinoaralkyl-, Cyanaminoalkyl- oder Cyanaminoalkarylgruppe darstellt.

Beispiele solcher bevorzugter Initiatoren sind 2,2′-Azo-bis(2-amidinopropan)dihydrochlorid, 2,2′-Azo-bis(2-amidinobutan)dihydrochlorid, 2,2′-Azo-bis(N-phenylamidinopropan)dihydrochlorid, 2,2′-Azo-bis(N,N-dimethylamidinopropan)dihydrochlorid, 2,2′-Azo-bis(N-hydroxyäthylamidinopropan)dihydrochlorid und 2,2′-A szo-bis [2-(imidazolinyl)propan]dihydrochlorid.

Diese Initiatoren werden vorteilhaft in Mengen von 0,2 - 10 Gew.%, bezogen auf das Gewicht der eingesetzten Monomeren verwendet. Vorzugsweise kommen Mengen von 0,7 bis 7,0 Gew.% zum Einsatz.

Als Polymerisationsregler können übliche Verbindungen eingesetzt werden, z.B. niedrigmolekulare, wasserlösliche Mercaptoverbindungen, z.B. Mercaptoäthanol, oder ein Alkanol, z.B. Isopropanol oder noch phosphorige Säure. Diese Polymerisationsregler werden vorteilhaft in Mengen von 0,01 bis 10 Gew.%, vorzugsweise 0,05 bis 5 Gew.% bezogen auf das Gewicht der eingesetzten Monomeren verwendet.

Die Polymerisation erfolgt vorteilhaft in Abwesenheit von Luftsauerstoff, vorzugsweise unter mit Stickstoff inertisierter Atmosphäre.

Das durchschnittliche Molekulargewicht (Gewichtsdurchschnitt) der erfindungsgemässen Copolymeren kann in einem sehr breiten Bereich schwanken, vorteilhaft im Bereich von 100'000 bis 20'000'000, vorzugsweise 500'000 bis 10'000'000.

Für die Einstellung saurer pH-Werte und im speziellen zur Herstellung der protonierten Produkte (Säureaddukte) können beliebige an sich übliche Säuren verwendet werden. Die Säureaddukte können durch Anlagerung beliebiger üblicher, vorzugsweise niedrigmolekularer Säuren entstehen, wie sie im allgemeinen zum Protonieren von Aminen zur Herstellung wasserlöslicher Ammoniumsalze verwendet werden, vornehmlich einfache Mineralsäuren, insbesondere Salzsäure, Bromwasserstoff, Schwefelsäure oder Phosphorsäure, oder niedrigmolekulare aliphatische Carbonsäuren, vorzugsweise mit 1-4 Kohlenstoffatomen, insbesondere Ameisensäure, Essigsäure, Oxalsäure und Milchsäure. Und so kann auch das Gegenion $Z^{\ominus}$ den Anionen dieser Säuren entsprechen oder noch ein durch die quaternierende Aminoalkylierung entstehendes Anion sein, welches vornehmlich ein Halogenid ist, vornehmlich Chlorid oder Bromid. Für die Einstellung besonders tiefer pH-Werte, z.B. wie oben genannt, werden vorzugsweise die stärkeren Mineralsäuren, insbesondere Salzsäure oder Schwefelsäure, eingesetzt. Zur Einstellung von stark basischen pH-Werte werden vorzugsweise Alkalimetallhydroxyde (insbesondere KOH oder NaOH) eingesetzt. Um in Gegenwart von primären Carbonamidgruppen Vernetzungen zu verhindern ist es von Vorteil Ammoniumsalze starker Mineralsäuren, insbesondere Ammoniumchlorid oder -sulfat nachträglich zuzugeben.

Die wie beschrieben hergestellten Copolymeren können gewünschtenfalls vom Reaktionsgemisch isoliert werden; da die Copolymeren in wässrigem Medium, so wie sie hergestellt worden sind, direkt verwendbar sind, ist es bevorzugt, sie nicht von der Mutterlauge zu isolieren, sondern so wie sie hergestellt worden sind, direkt zum Einsatz zu bringen. Die wässrigen konzentrierten Präparate, insbesondere mit 2-50, vorzugsweise 5-30 Gew.% Trockenstoffgehalt, weisen eine gute Lagerbeständigkeit auf.

Die erfindungsgemässen kationischen Copolymeren sind mit Wasser verdünnbar, d.h. sie werden in Wasser homogen verteilt und bilden mindestens kolloidale, insbesondere echte wässrige Lösungen. Sie sind insbesondere Polyelektrolyte mit polykationischem Charakter und sind weitgehend frei von einpolymerislerten anionischen Monomereinheiten, wobei ein kleiner Anteil, vornehmlich weniger als 3 Mol%, vorteilhaft weniger als 1 Mol%, vorzugsweise nicht mehr als 0,2 Mol% allfälliger Carboxygruppen aus der als Sekundärreaktion möglichen Hydrolyse von vorkommenden Amidgruppen noch tolerierbar ist, wobei solche durch allfällige Hydrolyse gegebenenfalls vorkommenden anionischen Monomereinheiten jedenfalls in kleineren Molanteilen vorkommen als die kationischen Monomereinheiten. Die seitenkettenhaltigen erfindungsgemässen Copolymeren sind vornehmlich weitgehend unvernetzt und deren Grundgerüst (Kohlenwasserstoffkette) ist weitgehend linear. Sie können in allen Gebieten der Technik eingesetzt werden, in denen kationische wasserlösliche Polymerisate verwendet werden; insbesondere sind sie als Fällungs- und Flockungsmittel geeignet und können für die Wasser- und Abwasserreinigung und für die Abwasserschlammentwässerung eingesetzt werden; sie zeichnen sich besonders durch ihre ausgeprägten Retentions- und Entwässerungseigenschaften aus und können daher mit Vorteil als Retentions- und Entwässerungsmittel vorzugsweise im schwach basischen bis nahezu neutralen Bereich (insbesondere pH 6,5 bis 8) zur Herstellung von Cellulosefaser- und/oder Zellstoffgebilden eingesetzt werden. Ein weiterer Gegenstand der Erfindung ist also die Verwendung der erfindungsgemässen Produkte als Fällungs- und Flockungsmittel, vorzugsweise als Retentions- und Entwässerungsmittel für die Herstellung von Zellulosefaser- und/oder Zellstoffgebilden, im wesentlichen Pappe und Papier; ausserdem eignen sie sich auch gut als Flockungsmittel für wässrige Schlämme, insbesondere Faulschlamm und Frischschlamm von kommunalen Kläranlagen. Weiter ist auch Gegenstand der Erfindung das Verfahren zur Herstellung von Zellulosefaser- bzw. Zellstoffgebilden, insbesondere Pappe und vorzugsweise Papier, das dadurch gekennzeichnet ist, dass man als Retentions- und/oder Entwässerungsmittel ein erfindungsgemässes Produkt einsetzt.

Bei der Herstellung von Papier, insbesondere bei der kontinuierlichen Herstellung von Papierbahnen, unter Einsatz der erfindungsgemässen Produkte kann man eine besonders homogene Blattbildung beobachten..

Die erforderliche (bzw. optimale) Konzentration des Copolymeren für die jeweilige Anwendung richtet sich selbstverständlich nach Art und-Konzentration der zu behandelnden gelösten oder dispergierten, insbesondere suspendierten Substanzen. Der pH-Wert bei der Ausflockung kann in üblichen Bereichen variieren, vornehmlich im schwach-alkalischen bis sauren Bereich je nach Einsatzgebiet (bevorzugt nahezu neutral), vornehmlich pH 4-8, vorteilhaft 5-7,5, für Papier vorzugsweise 6,5 bis 8.

In den folgenden Beispielen bedeuten die Teile, wenn nicht anders angegeben, Gewichtsteile und die Prozente Gewichtsprozente; die Temperaturen sind in Celsiusgraden angegeben. Gewichtsteile stehen zu Volumenteilen wie g zu ml. Die Viskositäten sind bei 20°C gemessen.

Beispiel 1

34 Teile Dimethylaminopropyl-methacrylamid, 26 Teile 1-Amino-2-chlorpropan Hydrochlorid und 50 Teile Wasser werden vorgelegt und bei Raumtemperatur unter Rühren mit 26,67 Teilen einer 30%igen wässrigen Natriumhydroxydlösung versetzt. Sodann wird innert 30 Minuten auf 60°C erhitzt und bei dieser Temperatur während einer Stunde weitergerührt. Sodann werden 500 Teile Wasser zugegeben und der pH mit Hilfe von 30%-iger wässriger Salzsäure auf 2,8 eingestellt. Anschliessend werden 58 Teile Acrylamid und so viel Wasser zugegeben, dass total 1216 Teile monomerhaltige Lösung erhalten werden. Nun werden 0,9 Teile 2,2′-Azobis(2-amidinopropan)-dihydrochlorid zugegeben und die entstehende Lösung unter Rühren mittels eines kräftigen Stickstoffstroms von Luft befreit. Nach 30 Minuten wird der Stickstoff schwächer eingestellt, der Ansatz auf 60°C erhitzt und 15 Stunden bei dieser Temperatur gehalten. Anschliessend wird auf Raumtemperatur (= 20°C) abgekühlt und ausgeladen. Man erhält 1216 Teile eines sehr wirksamen Retentions- und Entwässerungsmittels für die Papierherstellung. Die Viskosität des Produktes beträgt 2900 mPas (Spindel 4, 60 U/Min).

Beispiel 2

136 Teile Dimethylaminopropyl-methacrylamid sowie 400 Teile Wasser werden vorgelegt und der pH wird mit 80 Teilen 36%iger wässriger Salzsäure auf 2,8 eingestellt. Anschliessend gibt man 227,2 Teile Acrylamid dazu und so viel Wasser, dass 1600 Teile Lösung vorliegen. Nun kontrolliert man dass der pH immer noch 2,8 beträgt und fügt 3 Teile einer 10%igen Lösung von Mercaptoäthanol in Isopropanol als Polymerisationsregler zu. Nun wird die erhaltene Lösung unter Rühren mittels eines kräftigen Stickstoffstroms von Luft befreit und auf 60°C erhitzt, wobei mit dem Zutropfen einer Lösung von 7,2 Teilen 2,2′-Azobis(2-amidinopropan)-dihydrochlorid in 152,8 Teile Wasser begonnen wird. Die Zutropfzeit beträgt 10 Stunden. Danach lässt man noch 10 Stunden bei 60°C unter Stickstoff auspolymerisieren, kühlt auf 40°C ab und gibt 92,8 Teile 2-Chloräthylamin Hydrochlorid dazu. Nun werden noch 212,8 Teile einer 30%igen wässrigen Natriumhydroxydlösung zugefügt und die Temperatur wieder auf 60°C erhöht. Nach 3 Stunden bei 60°C wird auf Raumtemperatur abgekühlt. Die Viskosität beträgt 9100 mPas (Brookfieldviskosimeter, Spindel 4, 60 U/Min) und der pH 9,5. Nun werden noch 445 Teile Ammoniumchlorid sowie 1600 Teile Wasser zugegeben und der pH mit 36%iger Salzsäure auf 2,0 eingestellt. Man erhält ein lagerstabiles, hochwirksames Retentions- und Entwässerungsmittel für die Papierindustrie mit einer Brookfieldviskosität von 500 mPas (Spindel 4, 60 U/Min).

Beispiel 3

68 Teile Dimethylaminopropyl-methacrylamid sowie 54,1 Teile Wasser und 46,4 Teile 2-Chloräthylamin Hydrochlorid werden vorgelegt und bei Raumtemperatur, unter Kühlen mit 53,66 Teilen einer 30%igen wässrigen Natriumhydroxidlösung versetzt. Sodann wird innert 30 Minuten auf 95°C erhitzt und dann wird 1 Stunde bei dieser Temperatur weitergerührt. Nun werden 1000 Teile Wasser sowie 116 Teile Acrylamid zugegeben und der pH mit 36%iger wässriger Salzsäure auf 2,8 eingestellt, wobei durch Zugabe von wenig Wasser 2050 Teile monomerhaltiger Lösung erhalten werden. Nun werden 6 Teile phosphorige Säure sowie 1,8 Teile 2,2′-Azobis(2-amidinopropan)-dihydrochlorid zugegeben, mit Stickstoff inertisiert und die Temperatur auf 60°C erhöht. Nach 15 Stunden wird eine Brookfieldviskosität von 1500 mPas (Spindel 4, 60 U/Min) gemessen. Nun wird auf Raumtemperatur abgekühlt und es werden 236,7 Teile Ammoniumchlorid zugegeben, der pH wird mit 36%iger Salzsäure auf 2,0 eingestellt und es wird so viel Wasser zugefügt, dass man 2367 Teile Produkt erhält. Die Viskosität beträgt sodann 1000 mPas (Brookfield, Spindel 4, 60 U/min). Das Produkt ist ein lagerstabiles, wirksames Retentions- und Entwässerungsmittel für die Papierherstellung.

Beispiel 4

12,13 Teile Diallylamin sowie 21,25 Teile Dimethylaminopropyl-methacrylamid werden mit 25 Teilen Wasser vorgelegt und bei Raumtemperatur unter Kühlen mit 51,23 Teilen 2-Aminoäthylbromid-hydrobromid und 33,33 Teilen einer 30%igen wässrigen Natriumhydroxidlösung versetzt. Sodann wird auf 60°C erhitzt und 5 Stunden bei dieser Temperatur ausreagieren gelassen. Sodann wird der pH mit 36%iger Salzsäure auf 2,5 eingestellt. Nun werden 72,5 Teile Acrylamid und so viel Wasser zugegeben, dass 1311 Teile monomerhaltige Lösung erhalten werden. Anschliessend wird mit Stickstoff inertisiertp auf 60°C erhitzt und mit dem Zutropfen von 61 Teilen einer Lösung von 9 Teilen 2,2′-Azobis(2-amidinopropan)-dihydrochlorid in 52 Teilen Wasser begonnen. Die Zutropfzeit beträgt 10 Stunden. Danach lässt man noch 9 Stunden bei 60°C ausreagieren, kühlt auf Raumtemperatur ab und lädt aus. Man erhält ein wirksames Retentions- und Entwässerungsmittel für die Papierherstellung.

Beispiel 5

Das Beispiel 4 wird wiederholt aber es werden eingesetzt:

| | |
|---|---|
| 12,13 | Teile Diallylamin |
| 21,25 | Teile Dimethylaminopropyl-methacrylamid |
| 102,45 | Teile 2-Aminoäthylbromid-hydrobromid |
| 66,66 | Teile wässrige 30%ige Natriumhydroxidlösung |
| 50,00 | Teile Wasser |
| 72,50 | Teile Acrylamid |
| soviel | Teile Wasser, dass 1438 Teile monomerhaltiger Lösung erhalten werden |
| 61,00 | Teile Initiatorlösung [9 Teile 2,2'Azobis(2-amidinopropan)-dihydrochlorid in 52 Teile Wasser]. |

Beispiel 6

1258 Teile einer 36,2%igen wässrigen Diallylaminlösung sowie 1010 Teile einer 53,8%igen wässrigen Chloräthylaminhydrochloridlösung werden vorgelegt und innert von 1 Stunde mit 625 Teilen 30%iger wässriger Natriumhydroxydlösung versetzt, wobei die Temperatur bis auf 60°C ansteigt. Sodann wird bei dieser Temperatur während 2 Stunden weitergerührt und kontrolliert, ob die Reaktion beendet ist (Chlor-Ionen Titration). Anschliessend wird auf Raumtemperatur abgekühlt. 289 Teile der erhaltenen Lösung, 133 Teile Acrylamid und 1792,7 Teile Wasser werden sodann vorgelegt, mit 57 Teilen 30%iger Salzsäure neutralislert und die entstehende Lösung mit Stickstoff inertisiert. Nun wird auf 60°C erhitzt und mit dem Zutropfen einer Lösung von 2,3 Teilen 2,2'-Azobis(2-amidinopropan)-dihydrochlorid in 27 Teile Wasser begonnen. Die Zutropfzeit beträgt 8 Stunden. Danach lässt man noch 7 Stunden bei 60°C auspolymerisieren, kühlt ab und lädt aus. Man erhält 2301 Teile einer klaren, gelben Lösung mit einem Aktivstoffgehalt von 9,4% (auf die freie Base bezogen). Das Produkt ist ein hochwirksames Retentions- und Entwässerungsmittel für die Papierherstellung.

Applikationsbelspiel A1

Es wird ein 2%iger wässriger Papierbrei folgender Feststoffzusammensetzung verwendet:

| | |
|---|---|
| 50 | Teile geblelchter Sulfitzellstoff |
| 50 | Teile geblelchter Buchenzellstoff |
| 30 | Teile Kaolin |
| 3 | Teile Harzleim |
| 2 | Teile Aluminiumsulfat |

Vor der Blattbildung auf dem Rapid-Köthen-Blattbildner werden 125ml Prüfstoff mit 5 resp. 10ml einer 0,05%igen wässrigen Lösung des im Beispiel 1 beschriebenen Produktes sowie mit 875ml Verdünnungswasser vermengt. Nach einer Rührzeit von 5 Sekunden bei 250 U/Min wird das Stoff-Wassergemisch in die Füllkammer des Blattbildners (System Rapid-Köthen) überführt, in welcher 3 l Wasser vorgelegt sind. Nach einer Haltezeit von 20 Sekunden wird durch Betätigen des Absaugventils das Blatt gebildet. Man erhält ein Papier mit sehr hoher Füllstoffretention.

Applikationsbeispiele A2 bis A6

Man verfährt wie im Applikationsbeispiel A1 beschrieben, mit dem Unterschied, dass anstelle des Produktes vom Beispiel 1 die gleiche Menge der Produkte der Beispiele 2, 3, 4, 5 bzw. 6 eingesetzt wird.

Applikationsbeispiel B1

Es wird ein 2%iger wässriger Papierbrei folgender Feststoffzusammensetzung verwendet:

100 Teile gebleichter Sulfitzellstoff
20 Teile Calciumcarbonat

Vor der Blattbildung auf dem Rapid-Köthen-Blattbildner werden 125ml Prüfstoff dem Prüfstoffvorrat entnommen und mit 1% (bezogen auf den Sulfitzellstoff) einer handelsüblichen Emulsion eines synthetischen Leimes (Emulsion aus dimerem Alkylketen) vermischt. Anschliessend werden 5 bis 15ml einer 0,05%igen wässrigen Lösung des im Beispiel 1 beschriebenen Produktes sowie 875ml Verdünnungswasser dem Papierstoff zugefügt. Nach einer Rührzeit von 5 Sekunden bei 250 U/Min wird das Stoff/Wassergemisch in die Füllkammer des Blattbildners (System-Rapid-Köthen) überführt, wobei in der Füllkammer 3 l Wasser vorgelegt sind. Nach einer Haltezeit von 20 Sekunden wird durch Betätigen des Absaugventils das Blatt gebildet. Das

hergestellte Papier zeichnet sich durch seine hohe Füllstoffretention aus.

Applikationsbeispiele B2 bis B6

Man verfährt wie im Applikationsbeispiel B1 beschrieben, mit dem Unterschied, dass anstelle des Produktes vom Beispiel 1 die gleiche Menge der Produkte der Beispiele 2, 3, 4, 5 bzw. 6 eingesetzt wird.

Applikationsbeispiel C1

250ml einer 2%igen altpapierhaltigen Zellstoffsuspension folgender Feststoffzusammensetzung:

25 Teile Holzschliff
25 Teile Zeitungen
25 Teile Karton (grau)
25 Teile Wellpappe
5 Teile Kaolin

werden mit 875ml Wasser, die 2,5 bis 15ml einer 0,2%igen wässrigen Lösung des im Beispiele 1 beschriebenen Produktes enthalten, unmittelbar (ca. 20 Sekunden) vor der Prüfung vermengt und auf dem Schopper-Riegler-Gerät entwässert. Als Mass für die Flockungswirkung dient die Zeit, welche für den Austritt einer bestimmten Menge Filtrat aus der Suspension benötigt wird. (Die angewandte Prüfmethode ist im Merkblatt V 17/61 des "Vereins der Zellstoff- und Papier-Chemiker und -Ingenieure" beschrieben). Die Entwässerung wird durch die Anwesenheit des im Beispiel 1 beschriebenen Produktes deutlich beschleunigt.

Applikationsbeispiele C2 bis C6

Man verfährt wie im Applikationsbeispiel C1 beschrieben, mit dem Unterschied, dass anstelle des Produktes vom Beispiel 1 die gleiche Menge der Produkte der Beispiele 2, 3, 4, 5 bzw. 6 eingesetzt wird.

## Patentansprüche

### Patentansprüche für folgende Vertragsstaaten: AT, BE, CH, DE, FR, GB, IT, LI, NL, SE

1. Kationische, mit Wasser verdünnbare, seitenkettenhaltige Vinylcopolymere, gekennzeichnet durch einen Gehalt an Gruppen (γ) der Formel

-X-Alk-Y- (I),

worin

Alk Alkylen mit 2 bis 6 Kohlenstoffatomen, hydroxysubstituiertes Alkylen mit 3 bis 6 Kohlenstoffatomen oder durch -O- unterbrochenes Alkylen mit 4-6 Kohlenstoffatomen,

X eine basische Aminogruppe oder eine Ammoniumgruppe

und

Y eine basische -NH-Gruppe oder ein Säureaddukt davon

bedeuten, wobei eines von X und Y weiter an einen gegebenenfalls substituierten aliphatischen oder heteroaromatischen Kohlenwasserstoffrest und das andere an Wasserstoff oder an einen gegebenenfalls substituierten aliphatischen Kohlenwasserstoffrest gebunden sind, in mindestens einem Teil der Seitenketten, wobei mindestens 1 Mol% der einpolymerisierten Comonomereinheiten solche (γ)-haltige Seitenketten tragen.

2. Copolymere gemäss Anspruch 1 im wesentlichen bestehend aus wiederkehrenden Comonomereinheiten der Formel

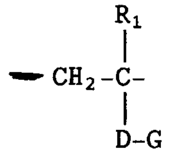

(IIc),

gegebenenfalls neben Comonomereinheiten der Formel

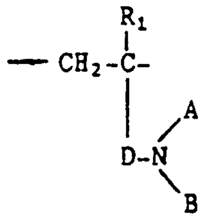

(IIa)

und/oder

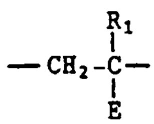

(IIb),

worin

$R_1$ Wasserstoff oder Methyl,

A und B jeweils Wasserstoff oder einen über ein aliphatisches oder heteroaromatisches Kohlenstoffatom an das N-Atom gebundenen aliphatischen, araliphatischen oder heteroaromatischen Substituenten,

D eine Gruppe, die, gegebenenfalls unter Einbezug von A und gegebenenfalls B zur Bildung eines Heteroringes, die basische Aminogruppe mit der Hauptkette verbindet,

E einen nicht-ionogenen Substituenten

und

G einen basischen Aminostickstoff oder Ammoniumstickstoff mit Mono- bis Poly-(amino-Alk)- und/oder -(ammonium-Alk)-Substitution, wobei jeder Stickstoff in G nur an aliphatische und gegebenenfalls heteroaromatische Kohlenwasserstoffreste und gegebenenfalls an Wasserstoffatome covalent gebunden ist, und mindestens ein -Alk-NH-, gegebenenfalls in protonierter Form, in G enthalten ist,

bedeuten und in den Formeln (IIa) und (IIc) vorkommende basische Aminogruppen gegebenenfalls protoniert sind.

3. Verfahren zur Herstellung der Vinylcopolymeren gemäss Anspruch 1, dadurch gekennzeichnet, dass man

(α) ein entsprechendes kationisches, mindestens eine basische Aminogruppe enthaltendes Vinylpolymeres und/oder ein Säureaddukt davon am basischen gegebenenfalls protonierten Stickstoff zur Bildung von mindestens einem Rest (γ) aminoalkyliert,

oder

(β) mindestens eine Gruppe (γ) der Formel (I), wie im Anspruch 1 definiert, enthaltende Vinylcomonomeren (Vm1), gegebenenfalls zusammen mit weiteren Vinylcomonomeren,

welche

(Vm2): nicht-ionogene Comonomeren

oder

(Vm3): kationische Comonomeren, die keine (γ)-Gruppen enthalten, oder Gemische von zwei oder mehreren solcher Comonomeren (Vm2) und (Vm3) sind,

radikalisch copolymerisiert.

4. Verfahren nach Anspruch 3, dadurch gekennzeichnet, dass man in der Verfahrensvariante (α) mit einer Verbindung der Formel

$$Hal\text{-}Alk_3\text{-}NH\text{-}R \qquad (I'),$$

worin

$Alk_3$ $C_{2-6}$-Alkylen oder durch -O- unterbrochenes $C_{4-6}$-Alkylen,

Hal Halogen,

R Wasserstoff oder einen über ein aliphatisches Kohlenstoffatom an die NH-Gruppe gebundenen Kohlenwasserstoffrest mit 1-8 Kohlenstoffatomen oder einen durch -O- oder -NR′- unterbrochenen Kohlenwasserstoffrest mit 4 bis 8 Kohlenstoffatomen

und

R′ Wasserstoff oder $C_{1-2}$-Alkyl

bedeuten, aminoalkyliert.

5. Vinylmonomeren (Vm1) gekennzeichnet durch einen Gehalt an mindestens einer Gruppe (γ) der Formel (I), definiert wie im Anspruch 1, als Bestandteil des Moleküls.

6. Vinylmonomeren gemäss Anspruch 5 enthaltend die Teilstruktur der Formel

-N-Alk-N-Alk-NH- $(\gamma_2)$

7. Vinylmonomeren gemäss Anspruch 5 oder 6, der Formel

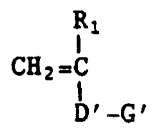

(IIIc),

worin

D′ der Bedeutung von D, wie im Anspruch 2 definiert, entspricht oder, wenn es durch die radikalische Polymerisation verändert wird, der jeweiligen monomeren Vorstufe davon entspricht

und

G′ die durch Aminoalkylierung durch Einführung von mindestens einer Gruppe Alk-N zur Bildung von mindestens einer Gruppe (γ) modifizierte Aminogruppe des Ausgangsmonomeren

bedeutet.

8. Verfahren zur Herstellung der Vinylmonomeren gemäss Anspruch 5, 6 oder 7, dadurch gekennzeichnet, dass man ein mindestens eine basische Aminogruppe oder ein Säureaddukt davon enthaltendes Vinylmonomeres durch Einführung von mindestens einer Gruppe (γ) aminoalkyliert.

9. Verfahren nach Anspruch 8, dadurch gekennzeichnet, dass man mit einer Verbindung der Formel (I′), definiert wie im Anspruch 4, aminoalkyliert, oder die Aminoalkylierung durch Umsetzung des Monomeren erst mit einem $C_{2-6}$-Dihalogenalkan, einem $C_{4-6}$-Di(halogenalkyl)äther oder einem $C_{3-6}$-Halogenepoxyalkan und dann mit einer Verbindung der Formel $R-NH_2$ oder einem Säureaddukt davon, durchführt.

10. Vinylmonomeren erhältlich nach dem Verfahren gemäss Anspruch 8 oder 9.

11. Verfahren nach Anspruch 3, dadurch gekennzeichnet, dass man in der Variante (β) Vinylcomonomeren gemäss einem der Ansprüche 6-10-gegebenenfalls in Gegenwart weiterer kationischer und/oder nicht-ionogener Vinylcomonomeren polymerisiert.

12. Die nach dem Verfahren gemäss Anspruch 3, 4 oder 11 erhältlichen Vinylcopolymeren.

13. Vinylcopolymere gemäss Anspruch 1, 2 oder 12 in wässriger Lösung oder Dispersion.

14. Verwendung der Vinylcopolymeren gemäss Anspruch 1, 12 oder 13 als Flockungsmittel und/oder Fällungsmittel.

15. Verwendung nach Anspruch 14 für die Herstellung von Papier.

16. Verwendung nach Anspruch 14 bei der Wasserreinigung oder Schlammentwässerung.

**Patentansprüche für folgenden Vertragsstaat : ES**

1. Wässrige Lösung oder Dispersion von kationischen Copolymeren, worin die kationischen Copolymeren kationische, mit Wasser verdünnbare, seitenkettenhaltige Vinylcopolymere sind, die durch einen Gehalt an Gruppen (γ) der Formel

-X-Alk-Y- (I),

worin

Alk Alkylen mit 2 bis 6 Kohlenstoffatomen, hydroxysubstituiertes Alkylen mit 3 bis 6 Kohlenstoffatomen oder durch -O- unterbrochenes Alkylen mit 4-6 Kohlenstoffatomen,

X eine basische Aminogruppe oder eine Ammoniumgruppe

und

Y eine basische -NH-Gruppe oder ein Säureaddukt davon

bedeuten, wobei eines von X und Y weiter an einen gegebenenfalls substituierten aliphatischen oder heteroaromatischen Kohlenwasserstoffrest und das andere an Wasserstoff oder an einen gegebenenfalls substituierten aliphatischen Kohlenwasserstoffrest gebunden sind, in mindestens einem Teil der Seitenketten gekennzeichnet sind, wobei mindestens 1 Mol% der einpolymerisierten Comonomereinheiten solche (γ)-haltige Seitenketten tragen.

2. Wässrige Lösung oder Dispersion gemäss Anspruch 1 worin die Copolymeren im wesentlichen aus wiederkehrenden Comonomereinheiten der Formel

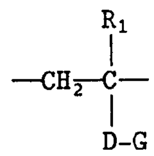

(IIc),

gegebenenfalls neben Comonomereinheiten der Formel

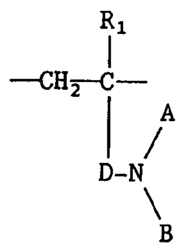

(IIa)

und/oder

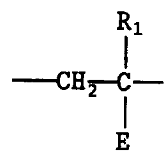

(IIb)

bestehen, worin

$R_1$ Wasserstoff oder Methyl,

A und B jeweils Wasserstoff oder einen über ein aliphatisches oder heteroaromatisches Kohlenstoffatom an das N-Atom gebundenen aliphatischen, araliphatischen oder heteroaromatischen Substituenten,

D eine Gruppe, die, gegebenenfalls unter Einbezug von A und gegebenenfalls B zur Bildung eines Heteroringes, die basische Aminogruppe mit der Hauptkette verbindet,

E einen nicht-ionogenen Substituenten

und

G einen basischen Aminostickstoff oder Ammoniumstickstoff mit Mono- bis Poly-(amino-Alk)- und/oder -(ammonium-Alk)-Substitution, wobei jeder Stickstoff in G nur an aliphatische und gegebenenfalls heteroaromatische Kohlenwasserstoffreste und gegebenenfalls an Wasserstoffatome covalent gebunden ist, und mindestens ein -Alk-NH-, gegebenenfalls in protonierter Form, in G enthalten ist,

bedeuten und in den Formeln (IIa) und (IIc) vorkommende basische Aminogruppen gegebenenfalls protoniert sind.

3. Verfahren zur Herstellung von Vinylcopolymeren, die wie im Anspruch 1 definiert sind, dadurch gekennzeichnet, dass man

($\alpha$) ein entsprechendes, kationisches, mindestens eine basische Aminogruppe enthaltendes Vinylpolymeres und/oder ein Säureaddukt davon am basischen gegebenenfalls protonierten Stickstoff zur Bildung,von mindestens einem Rest ($\gamma$) aminoalkyliert,

oder

($\beta$) mindestens eine Gruppe ($\gamma$) der Formel (I), wie im Anspruch 1 definiert, enthaltende Vinylcomonomeren (Vm1), gegebenenfalls zusammen mit weiteren Vinylcomonomeren,

welche

(Vm2): nicht-ionogene Comonomeren

oder

(Vm3): kationische Comonomeren, die keine ($\gamma$)-Gruppen enthalten, oder Gemische von zwei oder mehreren solcher Comonomeren (Vm2) und (Vm3) sind,

radikalisch copolymerisiert.

4. Verfahren nach Anspruch 3, dadurch gekennzeichnet, dass man in der Verfahrensvariante ($\alpha$) mit einer Verbindung der Formel

$$Hal\text{-}Alk_3\text{-}NH\text{-}R \qquad (I'),$$

worin

$Alk_3$ $C_{2-6}$-Alkylen oder durch -O- unterbrochenes $C_{4-6}$-Alkylen,

Hal Halogen,

R Wasserstoff oder einen über ein aliphatisches Kohlenstoffatom an die NH-Gruppe gebundenen Kohlenwasserstoffrest mit 1-8 Kohlenstoffatomen oder einen durch -O- oder -NR′- unterbrochenen Kohlenwasserstoffrest mit 4 bis 8 Kohlenstoffatomen

und

R′ Wasserstoff oder $C_{1-2}$-Alkyl

bedeuten, aminoalkyliert.

5. Verfahren zur Herstellung der Vinylmonomeren (Vm1) definiert wie im Anspruch 3, dadurch gekennzeichnet, dass man ein mindestens eine basische Aminogruppe oder ein Säureaddukt davon enthaltendes Vinylmonomeres durch Einführung von mindestens einer Gruppe (γ) aminoalkyliert.

6. Verfahren nach Anspruch 5, dadurch gekennzeichnet, dass man mit einer Verbindung der Formel (I′), definiert wie im Anspruch 4, aminoalkyliert, oder die Aminoalkylierung durch Umsetzung des Monomeren erst mit einem $C_{2-6}$-Dihalogenalkan, einem $C_{4-6}$-Di(halogenalkyl)äther oder einem $C_{3-6}$-Halogenepoxyalkan und dann mit einer Verbindung der Formel $R\text{-}NH_2$ oder einem Säureaddukt davon, durchführt.

7. Verfahren nach Anspruch 3, dadurch gekennzeichnet, dass man in der Variante (β) Vinylcomonomeren (Vm1) gegebenenfalls in Gegenwart weiterer kationischer und/oder nicht-ionogener Vinylcomonomeren polymerisiert.

8. Verwendung der Vinylcopolymeren, die wie im Anspruch 1 definiert sind, als Flockungsmittel und/oder Fällungsmittel.

9. Verwendung nach Anspruch 8, dadurch gekennzeichnet, dass die Vinylcopolymeren in Form von wässrigen Lösungen oder Dispersionen gemäss Anspruch 1 eingesetzt werden.

10. Verwendung nach Anspruch 8 oder 9 für die Herstellung von Papier.

11. Verwendung nach Anspruch 8 oder 9 bei der Wasserreinigung oder Schlammentwässerung.

## Claims

### Claims for the following Contracting States : AT, BE, CH, DE, FR, GB, IT, LI, NL, SE

1. Cationic, water-dilutable, side-chains-containing vinylic copolymers characterized by a content of groups (γ) of the formula

$$-X\text{-}Alk\text{-}Y- \qquad (I),$$

wherein

Alk signifies alkylene with 2 to 6 carbon atoms, hydroxy-substituted alkylene with 3 to 6 carbon atoms or alkylene with 4-6 carbon atoms interrupted by oxygen,

X signifies a basic amino group or an ammonium group

and

Y signifies a basic -NH- group or an acid adduct thereof,

the one of X and Y being further linked to an optionally substituted aliphatic or hetero-aromatic hydrocarbon radical and the other being further linked to hydrogen or to an optionally substituted aliphatic hydrocarbon radical, in at least a part of the side-chains, at least 1 mole % of the comonomer-units in the polymer bearing such (γ)-containing side-chains.

2. Copolymers according to Claim 1 essentially consisting of repeating comonomer units of the formula

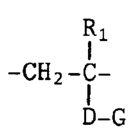

(IIc),

optionally besides comonomer units of the formula

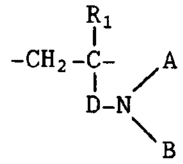

(IIa)

and/or

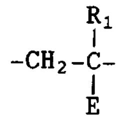

(IIb),

wherein

$R_1$ signifies hydrogen or methyl,

A and B signify each hydrogen or an aliphatic, araliphatic or heteroaromatic substituent which is bound to the N-atom through an aliphatic or heteroaromatic carbon atom,

D signifies a group that links the basic amino group to the main chain, optionally with inclusion of A and optionally B to form a heterocycle,

E signifies a non-ionogenic substituent,

and

G signifies a basic amino nitrogen or ammonium nitrogen with mono- to poly-(amino-Alk)- and/or -(ammonium-Alk)-substitution, each nitrogen in G being covalently bound exclusively to aliphatic and optionally heteroaromatic hydrocarbon radicals and optionally to hydrogen atoms, and at least one -Alk-NH- optionally in protonated form being contained in G,

any basic amino groups occurring in formulae (IIa) and (IIc) being optionally protonated.

3. A process for the production of vinylic copolymers according to claim 1, characterized in that

($\alpha$) a corresponding cationic vinylic polymer, that contains at least one basic amino group and/or an acid adduct thereof, is aminoalkylated at the basic optionally protonated nitrogen to form at least one radical ($\gamma$),

or

($\beta$) vinylic comonomers (Vm1) that contain at least one group ($\gamma$) of formula (I), as defined in Claim 1, optionally together with other vinylic comonomers

which are

(Vm2) non-ionogenic comonomers

or

(Vm3) cationic comonomers that contain no group ($\gamma$) or mixtures of two or more of such comonomers (Vm2) and (Vm3), are radically copolymerized.

4. A process according to Claim 3 characterized by aminoalkylating in process variant ($\alpha$) with a compound of formula

$$\text{Hal-Alk}_3\text{-NH-R} \qquad (I'),$$

wherein

$Alk_3$ signifies $C_{2-6}$-alkylene or $C_{4-6}$-alkylene interrupted by -O-,

Hal signifies halogen,

R signifies hydrogen, a hydrocarbon radical with 1-8 carbon atoms which is bound through an aliphatic carbon atom to the NH-group, or a hydrocarbon radical with 4 to 8 carbon atoms which is interrupted by -O-or -NR′

and

R′ signifies hydrogen or $C_{1-2}$-alkyl.

5. Vinylic monomers (Vm1) characterized by a content of at least one group ($\gamma$) of formula (I), defined as in claim 1, as a constituent of the molecule.

6. Vinylic monomers according to claim 5, containing the partial structure of the formula

$$\text{-N-Alk-N-Alk-NH-} \qquad (\gamma_2)$$

7. Vinylic monomers according to Claim 5 or 6, of the formula

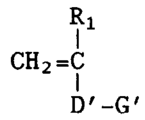 (IIIc),

wherein

D′ corresponds to the significance of D as defined in Claim 2 or, if it is modified by the radicalic polymerisation, corresponds to the respective preceding monomer stage thereof

and

G′ signifies the amino group of the starting monomer modified by aminoalkylation by introduction of at least one group Alk-N to form at least one group (γ).

8. A process for the production of vinylic monomers according to Claim 5, 6 or 7, characterized in that a vinylic monomer that contains at least one basic amino group or an acid adduct thereof is aminoalkylated by introduction of at least one group (γ).

9. A process according to Claim 8, characterized by aminoalkylating with a compound of formula (I′), defined as in claim 4, or carrying out the aminoalkylation by reaction of the monomer first with a $C_{2-6}$-dihalogenoalkane, a $C_{4-6}$-di(halogenoalkyl)ether or a $C_{3-6}$-halogenepoxyalkane and then with a compound of the formula $R\text{-}NH_2$ or an acid adduct thereof.

10. Vinylic monomers obtainable by the process according to Claim 8 or 9.

11. A process according to Claim 3, characterized in that in variant (β) vinylic comonomers defined as in any of Claims 6-10 are polymerized optionally in the presence of further cationic and/or non-ionogenic vinylic comonomers.

12. The vinylic copolymers obtainable by the process according to Claim 3, 4 or 11.

13. Vinylic copolymers according to Claim 1, 2 or 12 in aqueous solution or dispersion.

14. The use of vinylic copolymers according to Claim 1, 12 or 13 as flocculating and/or precipitating agents.

15. The use according to Claim 14 for the production of paper.

16. The use according to Claim 14 for the depuration of water or dehydration of sludges.

**Claims for the following Contracting State : ES**

1. Aqueous solution or dispersion of cationic copolymers, wherein the cationic copolymers are cationic, water-dilutable, side-chains-containing vinylic copolymers characterized by a content of groups (γ) of the formula

-X-Alk-Y- (I),

wherein

Alk signifies alkylene with 2 to 6 carbon atoms, hydroxy-substituted alkylene with 3 to 6 carbon atoms or alkylene with 4-6 carbon atoms interrupted by oxygen,

X signifies a basic amino group or an ammonium group

and

Y signifies a basic -NH- group or an acid adduct thereof,

the one of X and Y being further linked to an optionally substituted aliphatic or hetero-aromatic hydrocarbon radical and the other being further linked to hydrogen or to an optionally substituted aliphatic hydrocarbon radical, in at least a part of the side-chains, at least 1 mole % of the comonomer-units in the polymer bearing such (γ)-containing side-chains.

2. Aqueous solution or dispersion according to Claim 1, wherein the copolymers essentially consist of repeating comonomer-units of the formula

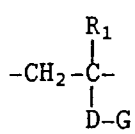 (IIc),

optionally besides comonomer-units of the formula

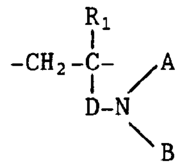

(IIa)

and/or

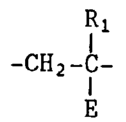

(IIb),

wherein

$R_1$ signifies hydrogen or methyl,

A and B signify each hydrogen or an aliphatic, araliphatic or heteroaromatic substituent which is bound to the N-atom through an aliphatic or heteroaromatic carbon atom,

D signifies a group that links the basic amino group to the main chain, optionally with inclusion of A and optionally B to form a heterocycle,

E signifies a non-ionogenic substituent,

and

G signifies a basic amino nitrogen or ammonium nitrogen with mono- to poly-(amino-Alk)- and/or -(ammonium-Alk)-substitution, each nitrogen in G being covalently bound exclusively to aliphatic and optionally heteroaromatic hydrocarbon radicals and optionally to hydrogen atoms, and at least one -Alk-NH- optionally in protonated form being contained in G,

any basic amino groups occurring in formulae (IIa) and (IIc) being optionally protonated.

3. A process for the production of vinylic copolymers, which are defined as in Claim 1, characterized in that

(α) a corresponding cationic vinylic polymer, that contains at least one basic amino group and/or an acid adduct thereof, is aminoalkylated at the basic optionally protonated nitrogen to form at least one radical (γ),

or

(β) vinylic comonomers (Vm1) that contain at least one group (γ) of formula (I), as defined in Claim 1, optionally together with other vinylic comonomers

which are

(Vm2) non-ionogenic comonomers

or

(Vm3) cationic comonomers that contain no group (γ) or mixtures of two or more of such comonomers (Vm2) and (Vm3), are radically copolymerized.

4. A process according to Claim 3 characterized by aminoalkylating in process variant (α) with a compound of formula

$$\text{Hal-Alk}_3\text{-NH-R} \qquad (I'),$$

wherein

$Alk_3$ signifies $C_{2-6}$-alkylene or $C_{4-6}$-alkylene interrupted by -O-,

Hal signifies halogen,

R signifies hydrogen, a hydrocarbon radical with 1-8 carbon atoms which is bound through an aliphatic carbon atom to the NH-group, or a hydrocarbon radical with 4 to 8 carbon atoms which is interrupted by -O- or -NR′-

and

R′ signifies hydrogen or $C_{1-2}$-alkyl.

5. A process for the production of vinylic monomers (Vm1) defined as in Claim 3, characterized in that a vinylic monomer that contains at least one basic amino group or an acid adduct thereof is aminoalkylated by introduction of at least one group (γ).

6. A process according to Claim 6, characterized by aminoalkylating with a compound of formula (I′), defined as in claim 4, or carrying out the aminoalkylation by reaction of the monomer first with a $C_{2-6}$-dihalogenoalkane, a $C_{4-6}$-di(halogenoalkyl)ether or a $C_{3-6}$-halogenepoxyalkane and then with a compound of

the formula $R\text{-}NH_2$ or an acid adduct thereof.

7. A process according to Claim 3, characterized in that in variant (β) vinylic comonomers (Vm1) are polymerized optionally in the presence of further cationic and/or non-ionogenic vinylic comonomers.

8. The use of vinylic copolymers defined as in Claim 1, as flocculating and/or precipitating agents.

9. The use according to Claim 8, characterized in that the vinylic copolymers are employed in the form of aqueous solutions or dispersions according to Claim 1.

10. The use according to Claim 8 or 9 for the production of paper

11. The use according to Claim 8 or 9 for the depuration of water or dehydration of sludges.

## Revendications

### Revendications pour les Etats contractants suivants : AT, BE, CH, DE, FR, GB, IT, LI, NL, SE

1. Copolymères vinyliques cationiques, à chaînes latérales, diluables dans l'eau, caractérisés par une teneur en groupes (γ) de formule

-X-Alk-Y- (I)

dans laquelle

Alk signifie un groupe alkylène contenant de 2 à 6 atomes de carbone, un groupe alkylène hydroxy-substitué contenant de 3 à 6 atomes de carbone ou un groupe alkylène contenant de 4 à 6 atomes de carbone interrompu par -O-,

X signifie un groupe amino basique ou un groupe ammonium

et

Y signifie un groupe -NH- basique ou l'un de ses produits d'addition d'acide,

l'un des symboles X et Y étant en plus fixé à un reste hydrocarboné aliphatique ou hétéroaromatique éventuellement substitué et l'autre à un atome d'hydrogène ou à un reste hydrocarboné aliphatique éventuellement substitué, dans au moins une partie des chaînes latérales, au moins 1 mole % des unités comonomères incorporées dans la polymérisation comportant de telles chaînes latérales contenant (γ).

2. Copolymères selon la revendication 1, constitués essentiellement d'unités comonomères récurrentes de formule

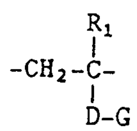

(IIc)

éventuellement à côté d'unités comonomères de formule

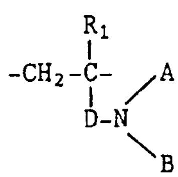

(IIa)

et/ou

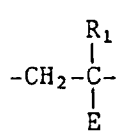

(IIb)

où

$R_1$ signifie l'hydrogène ou un groupe méthyle,

A et B signifient chacun l'hydrogène ou un substituant aliphatique, araliphatique ou hétéroaromatique lié à l'atome d'azote par l'intermédiaire d'un atome de carbone aliphatique ou hétéroaromatique,

D signifie un groupe qui relie le groupe amino basique à la chaîne principale, éventuellement avec inclusion de A et éventuellement de B en formant un hétérocycle,

E signifie un substituant non ionique

et

G signifie l'atome d'azote d'un groupe amino basique ou ammonium mono- à poly-(amino-Alk)- et/ou -(ammonium-Alk)-substitué, chaque atome d'azote dans G étant lié par covalence uniquement à des restes hydrocarbonés aliphatiques et éventuellement hétéroaromatiques et éventuellement à des atomes d'hydrogène, et G contenant au moins un groupe -Alk-NH-, éventuellement sous forme protonée,

les groupes amino basiques présents dans les formules (IIa) et (IIc) étant éventuellement protonés.

3. Procédé de préparation des copolymères vinyliques selon la revendication 1, caractérisé en ce que

($\alpha$) on aminoalkyle, sur l'atome d'azote basique éventuellement protoné, un polymère vinylique cationique correspondant qui contient au moins un groupe amino basique et/ou l'un de ses produits d'addition d'acide, pour former au moins un reste ($\gamma$),

ou

($\beta$) on soumet à une copolymérisation radicalaire des comonomères vinyliques (Vm1) contenant au moins un groupe ($\gamma$) de formule (I), tel que défini à la revendication 1, éventuellement ensemble avec d'autres comonomères vinyliques

qui sont

(Vm2) : des comonomères non ioniques

ou

(Vm3) : des comonomères cationiques qui ne contiennent pas de groupe ($\gamma$),

ou des mélanges de deux ou plusieurs de ces comonomères (Vm2) et (Vm3).

4. Procédé selon la revendication 3, caractérisé en ce qu'on aminoalkyle selon la variante ($\alpha$) du procédé avec un composé de formule

$$Hal\text{-}Alk_3\text{-}NH\text{-}R \qquad (I')$$

ou

$Alk_3$ signifie un groupe alkylène en $C_2$-$C_6$ ou un groupe alkylène en $C_4$-$C_6$ interrompu par -O-,

Hal signifie un halogène,

R signifie l'hydrogène, un reste hydrocarboné contenant de 1 à 8 atomes de carbone lié au groupe NH par l'intermédiaire d'un atome de carbone aliphatique ou un reste hydrocarboné contenant de 4 à 8 atomes de carbone interrompu par -O- ou -NR′-

et

R′ signifie l'hydrogène ou un groupe alkyle en $C_1$-$C_2$.

5. Monomères vinyliques (Vm1), caractérisés par une teneur d'au moins un groupe ($\gamma$) de formule (I) tel que défini à la revendication 1, comme constituant de la molécule.

6. Monomères vinyliques selon la revendication 5, contenant la structure partielle de formule

$$\text{-N-Alk-N-Alk-NH-} \qquad (\gamma_2)$$

7. Monomères vinyliques selon la revendication 5 ou 6, de formule

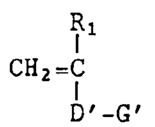

(IIIc)

dans laquelle

D′ correspond à la signification de D tel que défini à la revendication 2 ou, lorsqu'il est modifié par polymérisation radicalaire, à son précurseur monomère

et

G′ signifie le groupe amino, du monomère de départ, modifié par aminoalkylation effectuée par introduction d'au moins un groupe Alk-N pour former au moins un groupe ($\gamma$).

8. Procédé de préparation des monomères vinyliques selon la revendication 5, 6 ou 7, caractérisé en ce qu'on aminoalkyle un monomère vinylique contenant au moins un groupe amino basique ou l'un de ses produits d'addition d'acide, par introduction d'au moins un groupe ($\gamma$).

9. Procédé selon la revendication 8, caractérisé en ce qu'on aminoalkyle avec un composé de formule (I′) tel que défini à la revendication 4, ou qu'on effectue l'aminoalkylation par réaction du monomère d'abord avec un dihalogénoalcane en $C_2$-$C_6$, un éther di-(halogénoalkylique) en $C_4$-$C_6$ ou un halogéno-époxyalcane en $C_3$-$C_6$ et ensuite avec un composé de formule $R\text{-}NH_2$ ou l'un de ses produits d'addition d'acide.

10. Monomères vinyliques pouvant être obtenus selon le procédé de la revendication 8 ou 9.

11. Procédé selon la revendication 3, caractérisé en ce que, dans la variante (β), on polymérise les comonomères vinyliques selon l'une quelconque des revendications 6 à 10, éventuellement en présence d'autres comonomères vinyliques cationiques et/ou non ioniques.

12. Les copolymères vinyliques pouvant être obtenus selon le procédé de la revendication 3, 4 ou 11.

13. Copolymères vinyliques selon la revendication 1, 2 ou 12, en solution ou dispersion aqueuse.

14. L'utilisation des copolymères vinyliques selon la revendication 1, 12 ou 13, comme agents de floculation et/ou de précipitation.

15. L'utilisation selon la revendication 14, pour la préparation de papier.

16. L'utilisation selon la revendication 14, pour l'épuration de l'eau ou la déshydratation des boues.

**Revendications pour l'Etat contractant suivant : ES**

1. Solution ou dispersion aqueuse de copolymères cationiques, dans lesquelles les copolymères cationiques sont des copolymères vinyliques cationiques, à chaînes latérales, diluables dans l'eau, qui sont caractérisés par une teneur en groupes (γ) de formule

$$-X\text{-}Alk\text{-}Y- \qquad (I)$$

dans laquelle

Alk signifie un groupe alkylène contenant de 2 à 6 atomes de carbone, un groupe alkylène hydroxy-substitué contenant de 3 à 6 atomes de carbone ou un groupe alkylène contenant de 4 à 6 atomes de carbone interrompu par -O-,

X signifie un groupe amino basique ou un groupe ammonium

et

Y signifie un groupe NH basique ou l'un de ses produits d'addition d'acide,

l'un des symboles X et Y étant en plus fixé à un reste hydrocarboné aliphatique ou hétéroaromatique éventuellement substitué et l'autre à un atome d'hydrogène ou à un reste hydrocarboné aliphatique éventuellement substitué, dans au moins une partie des chaînes latérales, au moins 1 mole % des unités comonomères incorporées dans la polymérisation comportant de telles chaînes latérales contenant (γ).

2. Solution ou dispersion aqueuse selon la revendication 1, dans lesquelles les copolymères sont constitués essentiellement d'unités comonomères récurrentes de formule

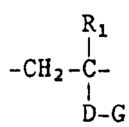

(IIc)

éventuellement à côté d'unités comonomères de formule

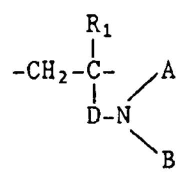

(IIa)

et/ou

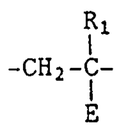

(IIb)

où

$R_1$ signifie l'hydrogène ou un groupe méthyle,

A et B signifient chacun l'hydrogène ou un substituant aliphatique, araliphatique ou hétéroaromatique lié à l'atome d'azote par l'intermédiaire d'un atome de carbone aliphatique ou hétéroaromatique,

D signifie un groupe qui relie le groupe amino basique à la chaîne principale, éventuellement avec inclusion de A et éventuellement de B en formant un hétérocycle,

E signifie un substituant non ionique

et

G signifie l'atome d'azote d'un groupe amino basique ou ammonium mono- à poly-(amino-Alk)- et/ou -(ammonium-Alk)-substitué, chaque atome d'azote dans G étant lié par covalence uniquement à des restes hydrocarbonés aliphatiques et éventuellement hétéroaromatiques et éventuellement à des atomes d'hydrogène, et G contenant au moins un groupe -Alk-NH-, éventuellement sous forme protonée,

les groupes amino basiques présents dans les formules (IIa) et (IIc) étant éventuellement protonés.

3. Procédé de préparation de copolymères vinyliques selon la revendication 1, caractérisé en ce que

(α) on aminoalkyle, sur l'atome d'azote basique éventuellement protoné, un polymère vinylique cationique correspondant qui contient au moins un groupe amino basique et/ou l'un de ses produits d'addition d'acide, pour former au moins un reste (γ),

ou

(β) on soumet à une copolymérisation radicalaire des comonomères vinyliques (Vm1) contenant au moins un groupe (γ) de formule (I), éventuellement ensemble avec d'autres comonomères vinyliques qui sont

(Vm2): des comonomères non ioniques

ou

(Vm3): des comonomères cationiques qui ne contiennent pas de groupe (γ), ou des mélanges de deux ou plusieurs de ces comonomères (Vm2) et (Vm3).

4. Procédé selon la revendication 3, caractérisé en ce qu'on aminoalkyle selon la variante (α) du procédé avec un composé de formule

$$Hal\text{-}Alk_3\text{-}NH\text{-}R \qquad (I')$$

où

$Alk_3$ signifie un groupe alkylène en $C_4$-$C_6$ ou un groupe alkylène en $C_4$-$C_6$ interrompu par -O-,

Hal signifie un halogène,

R signifie l'hydrogène, un reste hydrocarboné contenant de 1 à 8 atomes de carbone lié au groupe NH par l'intermédiaire d'un atome de carbone aliphatique ou un reste hydrocarboné contenant de 4 à 8 atomes de carbone interrompu par -O- ou -NR′-

et

R′ signifie l'hydrogène ou un groupe alkyle en $C_1$-$C_2$.

5. Procédé de préparation des monomères vinyliques (Vm1) tels que définis à la revendication 3, caractérisé en ce qu'on aminoalkyle un monomère vinylique contenant au moins un groupe amino basique ou l'un de ses produits d'addition d'acide, par introduction d'au moins un groupe (γ).

6. Procédé selon la revendication 5, caractérisé en ce qu'on aminoalkyle avec un composé de formule (I′) tel que défini à la revendication 4, ou qu'on effectue l'aminoalkylation par réaction du monomère d'abord avec un dihalogénoalcane en $C_2$-$C_6$, un éther di-(halogénoalkylique) en $C_4$-$C_6$ ou un halogéno-époxyalcane en $C_3$-$C_6$ et ensuite avec un composé de formule $R\text{-}NH_2$ ou l'un de ses produits d'addition d'acide.

7. Procédé selon la revendication 3, caractérisé en ce que, dans la variante (β), on polymérise des comonomères vinyliques (Vm1) éventuellement en présence d'autres comonomères vinyliques cationiques et/ou non ioniques.

8. L'utilisation des copolymères vinyliques tels que définis à la revendication 1, comme agents de floculation et/ou de précipitation.

9. L'utilisation selon la revendication 8, caractérisée en ce que les copolymères vinyliques sont mis en jeu sous forme de solutions ou dispersions aqueuses selon la revendication 1.

10. L'utilisation selon la revendication 8 ou 9, pour la préparation de papier.

11. L'utilisation selon la revendication 8 ou 9, pour l'épuration de l'eau ou la déshydratation des boues.